# EUROPÄISCHE PATENTSCHRIFT

(11) **EP 3 049 452 B1**
(45) Veröffentlichungstag und Bekanntmachung des Hinweises auf die Patenterteilung: **09.10.2019**
(21) Anmeldenummer: 14749800.0
(22) Anmeldetag: 07.08.2014
(51) Int. Cl.: C08G 12/02, C08F 8/00, C09D 173/00, C08F 8/32, C08G 71/04

(54) **BESCHICHTUNGSMITTELZUSAMMENSETZUNGEN UND DARAUS HERGESTELLTE, BEI NIEDRIGEN TEMPERATUREN HÄRTBARE BESCHICHTUNGEN UND SOWIE DEREN VERWENDUNG**
COATING COMPOSITION AND COATINGS PREPARED THEREFROM WHICH ARE CURABLE AT LOW TEMPERATURES AS WELL AS THEIR USE
COMPOSITION POUR COUCHES ET COUCHES CURABLE À BASSE TEMPÉRATURE PRÉPARÉ À PARTIR DE CES COMPOSITIONS ET LEURS UTILISATION.

(30) Priorität: 23.09.2013 EP 13185581
(43) Veröffentlichungstag der Anmeldung: 03.08.2016
(73) Patentinhaber: BASF Coatings GmbH, 48165 Münster (DE)
(72) Erfinder: HOFFMANN, Peter, 48308 Senden (DE); KLOPSCH, Rainer, 67551 Worms (DE); GROENEWOLT, Matthijs, 48167 Münster (DE); WESSLING, Elisabeth, 48282 Emsdetten (DE); FLORES-FIGUEROA, Aaron, 68163 Mannheim (DE); MICHEL, Kristin, 48324 Sendenhorst (DE)
(74) Vertreter: BASF IP Association
(86) Internationale Anmeldenummer: PCT/EP2014/066969
(87) Internationale Veröffentlichungsnummer: WO 2015/039803

(56) Entgegenhaltungen:
- EP-A2- 0 274 721
- WO-A1-96/26224
- WO-A1-2012/130718
- US-A- 5 374 699

## Beschreibung

Die vorliegende Erfindung betrifft nichtwässrige Beschichtungsmittelzu sammensetzungen enthaltend mindestens eine polyaminogruppenhaltige Verbindung (A) und mindestens eine Verbindung (B) mit mindestens zwei Alkyliden-1,3-dioxolan-2-on-Gruppen. Gegenstand der vorliegenden Erfindung sind außerdem die aus diesen Beschichtungsmittelzusammensetzungen hergestellten Beschichtungen sowie deren Verwendung, insbesondere für die Automobilserienlackierung, die Automobilreparaturlackierung und die Beschichtung von Anbauteilen sowie von Kunststoffen.

Beschichtungsmittelzusammensetzungen auf der Basis von Polyurethanen (PUR) finden auf unzähligen Gebieten Verwendung, insbesondere für die Automobilserienlackierung und die Automobilreparaturlackierung. Allen Polyurethanen gemeinsam ist dabei, dass sie durch Polyaddition von Polyaminen oder Polyolen an mehrwertige Isocyanate hergestellt werden. Durch geschickte Auswahl der Polyamin- bzw. Polyolkomponente kann dabei das Eigenschaftsprofil des erhaltenen Polyurethans gezielt gesteuert werden.

Als nachteilig erweist sich die hohe Reaktivität der mehrwertigen Isocyanate, die zu einer hohen Feuchtigkeitsempfindlichkeit führt. Zwar sind mehrwertige Isocyanate unter wasserfreien Bedingungen über längere Zeit lagerbar, jedoch tritt die Reaktion mit Wasser bei der Aushärtung ein, so dass sehr trockenes Arbeiten notwendig ist. Über die Feuchtigkeitsempfindlichkeit hinaus neigen insbesondere die aromatischen Isocyanate zu Verfärbungen. Problematisch ist auch die gesundheitliche Bedenklichkeit einiger Diisocyanate. So ist bekannt, dass Diisocyanate bei Hautkontakt oder Inhalation Allergien auslösen können. Aus diesem Grund wurden Oligomere von Diisocyanaten entwickelt, die aufgrund ihrer geringeren Flüchtigkeit leichter zu handhaben sind. Dennoch besteht grundsätzlich ein Bedarf an Alternativen für die aus dem Stand der Technik bekannten Polyisocyanate.

Alkyliden-1,3-dioxolan-2-one, die im Folgenden auch als exo-Vinylencarbonate bezeichnet werden, wurden verschiedentlich in der Literatur beschrieben, beispielsweise in DE 1098953, DE 3433403, EP 837062, JP 2006137733, JP 2008222619, J. Org. Chem. 2007, 72, 647-649, Angew. Chem. 2009, 121, 4258-4261, Eur. J. Org. Chem. 2007, 2604-2607, Eur. J. Org. Chem. 2008, 2309-2312, Org. Lett. 2006, 8, 515-518. Alkyliden-1,3-dioxolan-2-one werden dort als Synthesebausteine für die Herstellung von Wirk- und Effektstoffen vorgeschlagen.

Die WO 2011/157671 beschreibt die Verwendung von Alkyliden-1,3-dioxolan-2-onen zusammen mit aminischen Härtern als Additive in Epoxidharzzusammensetzungen.

Die WO 96/26224 beschreibt die Copolymerisation von 4-Vinyl-1,3-dioxolan-2-onen mit ethylenisch ungesättigten Comonomeren. Die dabei erhaltenen Polymere weisen 1,3-Dioxolan-2-on-Gruppen auf und werden zusammen mit aminofunktionellen Vernetzern zur Herstellung von Beschichtungen eingesetzt.

Aus der EP-B-1 448 619 sind 4-(Meth)acryloxyalkyl-1,3-dioxolan-2-one bekannt, die mit ethylenisch ungesättigten Comonomeren zu Copolymeren polymerisiert werden, welche über Alkyloxycarbonyl-Einheiten gebundene 1,3-Dioxolan-2-on-Gruppen aufweisen. Die Polymere werden mit aminischen Verbindungen umgesetzt, wobei man Pfropfpolymere erhält, die Urethan- und Hydroxylgruppen aufweisen. Die Pfropfpolymere werden in Beschichtungsmitteln, insbesondere Klarlacken, eingesetzt, die mit Hilfe üblicher Verbindungen mit reaktiven Gruppen, wie Hydroxylgruppen, Aminogruppen, Isocyanatgruppen, Epoxygruppen, Silangruppen, Acetoacetatgruppen, Vinylgruppen und Acrylatgruppen, bei erhöhten Temperaturen gehärtet werden.

Aus der WO2012/130718 sind außerdem Polymere auf der Basis von (2-Oxo-1,3-dioxolan-4-yl)methylacrylat und (2-Oxo-1,3-dioxolan-4-yl)methylmethacrylat bekannt, die zusammen mit Di- oder Polyaminen in Beschichtungsmittelzusammensetzungen eingesetzt werden.

Die Reaktivität der aus dem Stand der Technik bekannten Polymere mit 1,3-Dioxolan-2-on-Gruppen ist jedoch nicht zufriedenstellend. Zudem werden bei der Umsetzung von 1,3-Dioxolan-2-onen mit beispielsweise Aminen oder Alkoholen Hydroxylgruppen gebildet, die sich in verschiedenen Anwendungen als nachteilig erweisen können.

Die noch nicht offengelegte internationale Patentanmeldung PCT/EP2013/056716 beschreibt nun polymerisierbare Alkyliden-1,3-dioxolan-2-on-Monomere, deren Herstellung und deren Verwendung zur Herstellung von den entsprechenden Homo- oder Copolymerisaten sowie deren Verwendung als Vernetzerkomponente in 2K-Beschichtungsmittelzusammensetzungen. Zur Vernetzung dieser carbonatgruppenhaltigen Polymeren werden neben hydroxylgruppenhaltigen Verbindungen insbesondere aminogruppenhaltige Verbindungen eingesetzt. Im Falle der Copolymerisate wird allerdings zusammen mit dem Alkyliden-1,3-dioxolan-2-on-Monomer nur jeweils ein anderes Comonomer eingesetzt.

Aus US 5,374,699 A sind Zusammensetzungen bekannt, die ein Vinylpolymer mit mindestens einer 2-Oxo-1,3-dioxolan-4-yl-Gruppe und mindestens einer Carboxylgruppe und zudem einen Katalysator enthalten, der zur Ringöffnung der 2-Oxo-1,3-dioxolan-4-yl-Gruppe und Härten des Vinylpolymeren geeignet ist.

Nichtvernetzte Umsetzungsprodukte aus Verbindungen, die in statistischer Verteilung 1,3-Dioxolan-2-on-Gruppen tragende Struktureinheiten enthalten und Verbindungen, die mindestens eine primäre aliphatische oder cycloaliphatische Aminogruppe und zusätzlich mindestens eine weitere basische Aminogruppe enthalten, sind aus EP 0 274 721 A2 bekannt.

### Aufgabe

Aufgabe der vorliegenden Erfindung war es daher, Beschichtungsmittelzusammensetzungen zur Verfügung zu stellen, die zur Aushärtung keinen Zusatz von Polyisocyanaten und keinen Zusatz von Melamin-Formaldehydharzen erfordern. Ferner sollten die Beschichtungsmittelzusammensetzungen eine gute Reaktivität aufweisen, so dass sie unter den im Bereich der Automobilserienlackierung und der Automobilreparaturlackierung sowie im Bereich der Lackierung von Automobilanbauteilen und Nutzfahrzeugen üblichen Härtungsbedingungen eine ausreichende Vernetzung der resultierenden Beschichtung gewährleisten.

Außerdem sollten die Beschichtungsmittelzusammensetzungen zu Beschichtungen führen, die eine möglichst niedrige Eigenfarbe - insbesondere im Fall des Überbrennens - aufweisen bzw. falls beim Überbrennen eine Eigenfarbe auftritt, sollte diese Eigenfarbe reversibel sein.

Ferner sollten die Beschichtungsmittelzusammensetzungen auch die üblicherweise an die Klarlackschicht bei der Automobilserienlackierung und der Automobilreparaturlackierung gestellten Anforderungen erfüllen.

Schließlich sollten die Beschichtungsmittelzusammensetzungen einfach und sehr gut reproduzierbar herstellbar sein und während der Lackapplikation keine ökologischen Probleme bereiten.

### Lösung der Aufgabe

Im Lichte der obengenannten Aufgabenstellung wurden nichtwässrige Beschichtungsmittelzusammensetzungen gefunden, enthaltend
(A) mindestens eine polyaminogruppenhaltige Verbindung (A) sowie
(B) mindestens eine oligomere und/oder polymere Verbindung (B) mit mindestens zwei Alkyliden-1,3-dioxolan-2-on-Gruppen
dadurch gekennzeichnet, dass
die Verbindung (B) erhältlich ist unter Verwendung von
i. mindestens einem Monomer (B1) der Formel (I) 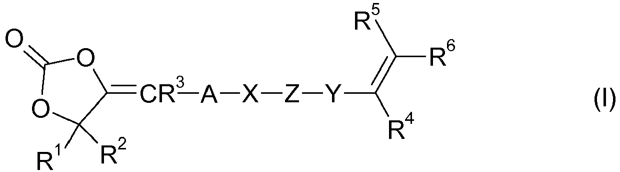 wobei
   - R¹, R²: unabhängig voneinander für Wasserstoff, C₁-C₆-Alkyl, C₁-C₄-Alkoxy-C₁-C₄-alkyl, C₅-C₆-Cycloalkyl, Phenyl oder Phenyl-C₁ C₄-alkyl stehen;
   - R³: für Wasserstoff, C-C₆-Alkyl, C₁-C₄-Alkoxy-C₁-C₄-alkyl, C₅-C₆-Cycloalkyl, Phenyl oder Phenyl-C₁-C₄-alkyl steht, wobei R³ insbesondere für Wasserstoff steht;
   - R⁴: für Wasserstoff, C₁-C₄-Alkyl, CH₂COOR⁸, Phenyl oder Phenyl-C₁-C₄-alkyl steht;
   - R⁵, R⁶: unabhängig voneinander für Wasserstoff oder C₁-C₄-Alkyl stehen oder einer der Reste R⁵ oder R⁶ auch für COOR⁸ oder CH₂COOR⁸ stehen kann;
   - A: für eine chemische Bindung oder C₁-C₄-Alkandiyl steht, wobei A insbesondere für C₁-C₄-Alkandiyl steht;
   - X: für O oder NR⁷ steht;
   - Z: für eine chemische Bindung, PO₂, SO₂ oder C=O steht, wobei Z insbesondere für C=O steht;
   - Y: für eine chemische Bindung, CH₂ oder CHCH₃ steht, wobei Y insbesondere für eine chemische Bindung steht;
   - R⁷: sofern vorhanden, für C₁-C₆-Alkyl steht;
   - R⁸: sofern vorhanden, für Wasserstoff oder C₁-C₆-Alkyl steht;
   und
ii. mindestens zwei unterschiedlichen, jeweils von dem Monomer (B1) verschiedenen Comonomeren (B2) und (B3).

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilserienlackierung, die Automobilreparaturlackierung und/oder für die Beschichtung von Automobil-Anbauteilen, von Kunststoffsubstraten und/oder von Nutzfahrzeugen.

Es wurde nun gefunden, dass die Verbindungen (B), die mindestens zwei Alkyliden-1,3-dioxolan-2-on-Gruppen der Formel (I') aufweisen, eine gegenüber den aus dem Stand der Technik bekannten Polymere mit 1,3-Dioxolan-2-on-Gruppen deutlich erhöhte Reaktivität aufweisen, so dass sie mit aminogruppenhaltigen Härtern unter den im Bereich der Automobilserienlackierung und der Automobilreparaturlackierung sowie im Bereich der Lackierung von Automobilanbauteilen und Nutzfahrzeugen üblichen Härtungsbedingungen eine ausreichende Vernetzung der resultierenden Beschichtung gewährleisten.

Ferner zeichnen sich die erfindungsgemäßen Beschichtungsmittelzusammensetzungen dadurch aus, dass sie zur Aushärtung keinen Zusatz von Polyisocyanaten und keinen Zusatz von Melamin-Formaldehydharzen erfordern und somit die mit diesen toxischen bzw. reizenden Verbindungen verbundenen ökologischen Probleme, insbesondere während der Lackapplikation, vermieden werden können.

Außerdem führen die Beschichtungsmittelzusammensetzungen zu Beschichtungen, die überraschenderweise eine erheblich niedrigere Eigenfarbe - insbesondere im Fall des Überbrennens - aufweisen als die Beschichtungsmittelzusammensetzungen auf der Basis des bekannten Glycerincarbonatacrylat-Copoymers. Allerdings sind gerade im Bereich der Automobillackierung gemäß den Spezifikationen der Automobilhersteller extrem niedrige Vergilbungswerte gefordert, die im Falle des Überbrennens auch mit den erfindungsgemäßen Beschichtungszusammensetzungen direkt nach dem Einbrennen nicht erreicht werden. Überraschenderweise wurde jedoch gefunden, dass die thermische Vergilbung der erfindungsgemäßen Beschichtungen durch die Einwirkung von Tageslicht innerhalb von 24 h vollständig reversibel ist und so eine Anwendung der erfindungsgemäßen Beschichtungsmittelzusammensetzungen für die Automobillackierung ermöglicht. Die Einwirkung von Tageslicht wird dabei mit dem sogenannten Suntest mit Tageslichtfilter simuliert, bei dem ein Xenonhochdruckbrenner als Strahlungsquelle im Wellenlängenbereich von 270 bis 800 nm die Strahlungsverteilung und -Intensität von Sonnenlicht unter Laborbedingen nachstellt ("SUNTEST"-Gerät der Fa. Heraeus Instruments; Strahlungsquelle: 1 Xenonhochdruckbrenner 1800 Watt, luftgekühlt, Supraxfilter).

Ferner erfüllen die Beschichtungsmittelzusammensetzungen auch die üblicherweise an die Klarlackschicht bei der Automobilserienlackierung und der Automobilreparaturlackierung gestellten Anforderungen.

Schließlich sind die Beschichtungsmittelzusammensetzungen einfach und sehr gut reproduzierbar herstellbar.

### Beschreibung der Erfindung

### Die erfindungsgemäßen Beschichtungsmittel

Im Rahmen der vorliegenden Erfindung wurden zur Bestimmung von nicht-flüchtigen Anteilen (nfA, Festkörper) jeweils konstante Bedingungen gewählt, sofern nichts anderes angegeben wurde. Zur Bestimmung des nicht-flüchtigen Anteils wird eine Menge von 1 g der jeweiligen Probe auf einen Festkörperdeckel aufgebracht und für 1 h bei 130°C erhitzt, auf Raumtemperatur abgekühlt und dann zurückgewogen (in Anlehnung an ISO 3251). Ermittelt wurde der nicht-flüchtige Anteil beispielsweise von entsprechenden Polymerlösungen beziehungsweise Harzen, die in der erfindungsgemäßen Beschichtungszusammensetzung enthalten sind, um dadurch beispielsweise den Gewichtsanteil des jeweiligen Bestandteils an einer Mischung mehrerer Bestandteile oder der gesamten Beschichtungsmittelzusammensetzung einstellen und bestimmen zu können.

Falls als Komponente (A) Polyamine eingesetzt werden, die unter Normaldruck von 1013 mbar und 25°C flüssig sind, so beziehen sich alle im folgenden genannten Gewichtsangaben und alle für die Komponente (A) angegebenen Bindemittelanteile auf die reine Wirksubstanz ohne Lösemittel. Die reine Wirksubstanz stellt dabei das eingewogene Polyamin (A) ohne Lösemittel dar. Wird die Komponente (A) als verdünnte Lösung eines flüssigen Polyamins eingesetzt, so wird der Bindemittelanteil der Komponente (A) aus der für die Lösung angegebenen Konzentration rechnerisch ermittelt.

Das massenmittlere (Mw) und zahlenmittlere (Mn) Molekulargewicht wird im Rahmen der vorliegenden Erfindung mittels Gelpermeationschromatographie bei 35°C mit einer Hochdruckflüssigkeitschromatographie-Pumpe und einem Brechungsindexdetektor bestimmt. Als Elutionsmittel wurde Tetrahydrofuran, enthaltend 0.1 Vol.-% Essigsäure, mit einer Elutionsgeschwindigkeit von 1 mL/min verwendet. Die Kalibrierung wird mittels Polystyrol-Standards durchgeführt.

### Die polyaminogruppenhaltige Verbindung (A)

Als polyaminogruppenhaltige Verbindung (A) können alle dem Fachmann bekannten Verbindungen eingesetzt werden, welche mindestens 2 Aminogruppen pro Molekül aufweisen.

Zu den aminischen Härtern (A) zählen beispielsweise aliphatische und cycloaliphatische Polyamine, aromatische und araliphatische Polyamine sowie polymere Amine, z. B. Aminoplaste und Polyamidoamine. Aminhärter vernetzen Polymere mit 1,3-Dioxolan-2-on-Gruppen, im Folgenden auch Carbonatpolymere genannt, durch Reaktion der primären oder sekundären Aminofunktionen der Polyamine mit den 1,3-Dioxolan-2-on-Gruppen der Carbonatpolymere unter Ausbildung von Urethanfunktionen.

Bevorzugte polyaminogruppenhaltige Verbindungen (A) weisen im Mittel wenigstens zwei primäre und/oder sekundäre Aminogruppen pro Molekül, z. B. zwei, drei oder vier primäre oder sekundäre Aminogruppen pro Molekül, auf. Sie können auch zusätzlich ein oder mehrere tertiäre Aminogruppen enthalten. Geeignete Polyamine sind beispielsweise
- aliphatische Polyamine wie Ethylendiamin, 1,2- und 1,3-Propandiamin, Neopentandiamin, Hexamethylendiamin, Octamethylendiamin, 1,10-Diaminodecan, 1,12-Diaminododecan, Diethylentriamin, Triethylentetramin, Tetraethylenpentamin, Trimethylhexamethylendiamin, Dimethylpropylendiamin, 1-(3-Aminopropyl)-3-aminopropan, 1,3-Bis-(3-aminopropyl)propan, 4-Ethyl-4-methylamino-1-octylamin und dergleichen;
- cycloaliphatische Diamine wie 1,2-Diaminocyclohexan, 1,3-Bis-(aminomethyl)cyclohexan, 1-Methyl-2,4-diaminocyclohexan, 4-(2-Aminopropan-2-yl)-1 -methylcyclohexan-1-amin, Isophorondiamin, 4,4'-Diaminodicyclohexylmethan, 3,3'-Dimethyl-4,4'-diaminodicyclohexylmethan, 4,8-Diamino-tricyclo[5.2.1.0]decan, Norbornandiamin, Menthandiamin, Menthendiamin und dergleichen;
- aromatische Diamine wie Toluylendiamin, Xylylendiamin, insbesondere meta-Xylylendiamin, Bis(4-aminophenyl)methan (MDA oder Methylendianilin), Bis(4-aminophenyl)sulfon (auch als DADS, DDS oder Dapson bekannt) und dergleichen;
- cyclische Polyamine wie Piperazin, N-Aminoethylpiperazin und dergleichen;
- Polyetheramine, insbesondere difunktionelle und trifunktionelle primäre Polyetheramine auf der Basis von Polypropylenglykol, Polyethylenglykol, Polybutylenoxid, Poly-(1,4-butandiol), Poly-Tetrahydrofuran (Poly-THF) oder Polypentylenoxid, z. B. 4,7,10-Trioxatridecan-1,3-diamin, 4,7,10-Trioxatridecan-1,13-diamin, 1,8-Diamino-3,6-dioxaoctan (XTJ-504, Fa. Huntsman), 1,10-Diamino-4,7-dioxadecan (XTJ-590, Fa. Huntsman), 1,12-Diamino-4,9-dioxadodecan (Fa. BASF SE), 1,3-Diamino-4,7,10-trioxatridecan (Fa. BASF SE), primäre Polyetheramine auf der Basis von Polypropylenglykol mit einer mittleren Molmasse von 230 wie z. B. Polyetheramine D 230 (Fa. BASF SE) oder Jeffamine® D 230 (Fa. Huntsman), difunktionelle, primäre Polyetheramine auf der Basis von Polypropylenglykol mit einer mittleren Molmasse von 400, z. B. Polyetheramine D 400 (Fa. BASF SE) oder Jeffamine® XTJ 582 (Fa. Huntsman), difunktionelle, primäre Polyetheramine auf Basis von Polypropylenglykol mit einer mittleren Molmasse von 2000 wie z. B. Polyetheramine D 2000 (Fa. BASF SE), Jeffamine® D2000 oder Jeffamine® XTJ 578 (jeweils Fa. Huntsman), difunktionelle, primäre Polyetheramine auf der Basis von Propylenoxid mit einer mittleren Molmasse von 4000 wie z. B. Polyetheramin D 4000 (Fa. BASF SE), trifunktionelle, primäre Polyetheramine hergestellt durch Reaktion von Propylenoxid mit Trimethylolpropan, gefolgt durch eine Aminierung der endständigen OH-Gruppen mit einer mittleren Molmasse von 403 wie z. B. Polyetheramine T 403 (Fa. BASF SE) oder Jeffamine® T 403 (Fa. Huntsman), trifunktionelle, primären Polyetheramine, hergestellt durch Reaktion von Propylenoxid mit Glycerin, gefolgt durch eine Aminierung der endständigen OH-Gruppen mit einer mittleren Molmasse von 5000 wie z. B. Polyetheramine T 5000 (Fa. BASF SE) oder Jeffamine® T 5000 (Fa. Huntsman), aliphatische Polyetheramine, die aus einem mit Propylenoxid gepfropften Polyethylenglykol aufgebaut sind und eine mittlere Molmasse von 600 aufweisen, wie z. B. Jeffamine® ED-600 bzw. Jeffamine® XTJ-501 (jeweils Fa. Huntsman), aliphatische Polyetheramine, die aus einem mit Propylenoxid gepfropften Polyethylenglykol aufgebaut sind und eine mittlere Molmasse von 900 aufweisen, wie z. B. Jeffamine® ED-900 (Fa. Huntsman), aliphatische Polyetheramine, die aus einem mit Propylenoxid gepfropften Polyethylenglykol aufgebaut sind und eine mittlere Molmasse von 2000 aufweisen, wie z. B. Jeffamine® ED-2003 (Fa. Huntsman), difunktionelle, primäre Polyetheramine, hergestellt durch Aminierung eines mit Propylenoxid gepfropften Diethylenglykols mit einer mittleren Molmasse von 220 wie z. B. Jeffamine® HK-511 (Fa. Huntsman), aliphatische Polyetheramine auf der Basis eines Copolymers aus Poly(tetramethylenetherglykol) und Polypropylenglykol mit einer mittleren Molmasse von 1000 wie z. B. Jeffamine® XTJ-542 (Fa. Huntsman), aliphatische Polyetheramine auf der Basis eines Copolymers aus Poly(tetramethylenetherglykol) und Polypropylenglykol mit einer mittleren Molmasse von 1900 wie z. B. Jeffamine® XTJ-548 (Fa. Huntsman), aliphatische Polyetheramine auf der Basis eines Copolymers aus Poly(tetramethylenetherglycol) und Polypropylenglycol mit einer mittleren Molmasse von 1400 wie z. B. Jeffamine® XTJ-559 (Fa. Huntsman), Polyethertriamine auf der Basis eines mit Butylenoxid gepfropften mindestens dreiwertigen Alkohols mit einer mittleren Molmasse von 400 wie z. B. Jeffamine® XTJ-566 (Fa. Huntsman), aliphatische Polyetheramine, hergestellt durch Aminierung von mit Butylenoxid aufgepfropften Alkoholen mit einer mittleren Molmasse von 219 wie z. B. Jeffamine® XTJ-568 (Fa. Huntsman), Polyetheramine auf der Basis von Pentaerythrit und Propylenoxid mit einer mittleren Molmasse von 600 wie z. B. Jeffamine® XTJ-616 (Fa. Huntsman), Polyetheramine auf der Basis von Triethylenglykol mit einer mittleren Molmasse von 148, z. B. Jeffamine® EDR-148 (Fa. Huntsman), difunktionelle, primäre Polyetheramine, hergestellt durch Aminierung eines mit Propylenoxid gepfropften Ethylenglykols mit einer mittleren Molmasse von 176 wie z. B. Jeffamine® EDR-176 (Fa. Huntsman) sowie Polyetheramine, hergestellt durch Aminierung von Poly-Tetrahydrofuran (Poly-THF) mit einer mittleren Molmasse von 250, z. B. PolyTHF-Amin 350 (Fa. BASF SE) und Mischungen dieser Amine;
- Polyamidoamine (Amidopolyamine), die durch die Reaktion von dimeren Fettsäuren (z. B. dimere Linolsäure) mit niedermolekularen Polyaminen wie Diethylentriamin, 1-(3-Aminopropyl)-3-aminopropan oder Triethylentetramin oder anderen Diaminen wie den zuvor genannten aliphatischen oder cycloaliphatischen Diaminen erhältlich sind;
- Addukte, die durch Umsetzung von Aminen, insbesondere Diaminen, mit einem Unterschuss an Epoxidharz bzw. Reaktivverdünner erhältlich sind, wobei man vorzugsweise solche Addukte einsetzt, worin etwa 5 bis 20 % der Epoxidgruppen mit Aminen, insbesondere Diaminen, umgesetzt worden sind;
- Phenalkamine, wie aus der Epoxidchemie bekannt;
- Mannichbasen, welche z. B. durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis(aminomethyl)cyclohexan mit Aldehyden, vorzugsweise Formaldehyd und ein- oder mehrwertigen Phenolen mit mindestens einer aldehydreaktiven Kernstelle, z. B. die verschiedenen Kresole und Xylenole, p-tert.-Butylphenol, Resorcin, 4,4'-Dihydroxydiphenylmethan, 4,4'-Dihydroxydiphenyl-2,2-propan, vorzugsweise aber Phenol, hergestellt werden;
sowie Mischungen der vorgenannten Aminhärter.

Bevorzugt ist die polyaminogruppenhaltige Verbindung (A) ausgewählt aus der Gruppe der (cyclo)aliphatischen Diamine, der (cyclo)aliphatischen Triamine und/oder der Polyetheramine.

Es können als Komponente (A) auch Mischungen verschiedener monomerer, oligomerer und/oder polymerer Polyamine eingesetzt werden. Insbesondere werden als Komponente (A) Mischungen verschiedener aliphatischer Di- und/oder aliphatischer Triamine, Mischungen verschiedener cycloaliphatischer Di- und/oder cycloaliphatischer Triamine und Mischungen verschiedener aliphatischer Di- und/oder aliphatischer Triamine mit cycloaliphatischen Di- und/oder cycloaliphatischen Triaminen eingesetzt. Ferner bevorzugt eingesetzt werden Polyetheramine, insbesondere difunktionelle und trifunktionelle primäre Polyetheramine auf der Basis von Propylenoxid, besonders bevorzugt trifunktionelle primäre Polyetheramine, hergestellt durch Reaktion von Propylenoxid mit Trimethylolpropan, gefolgt durch eine Aminierung der endständigen OH-Gruppen.

Bevorzugt enthält das erfindungsgemäße Beschichtungsmittel von 3 bis 30 Gew.-%, besonders bevorzugt von 5 bis 25 Gew.-%, mindestens einer polyaminogruppenhaltigen Verbindung (A), wobei die Gew.-%-Angaben jeweils bezogen sind auf den Bindemittelanteil des Beschichtungsmittels [also bezogen auf das Gesamtgewicht des Bindemittelanteils der erfindungsgemäßen Verbindungen (B) plus des Bindemittelanteils des Polyamins (A) plus Gewicht des ggf. eingesetzten Katalysators (D)].

### Die Verbindungen (B) mit mindestens zwei Alkyliden-1,3-dioxolan-2-on-Gruppen der Formel (I')

Es ist erfindungswesentlich, dass die erfindungsgemäß eingesetzten Verbindungen (B) mindestens zwei Alkyliden-1,3-dioxolan-2-on-Gruppen der Formel (I') enthalten: 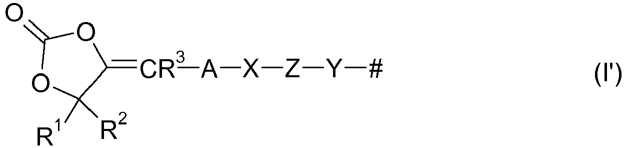 wobei # für die Anbindung an das Polymerrückgrat steht und
- R¹, R²: unabhängig voneinander für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl stehen;
- R3: für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl steht, wobei R³ insbesondere für Wasserstoff steht;
- A: für eine chemische Bindung oder C₁-C₄-Alkandiyl steht, wobei A insbesondere für C₁-C₄-Alkandiyl steht;
- X: für O oder NR₇ steht;
- Z: für eine chemische Bindung, PO₂, SO₂ oder C=O steht, wobei Z insbesondere für C=O steht;
- Y: für eine chemische Bindung, CH₂ oder CHCH₃ steht, wobei Y insbesondere für eine chemische Bindung steht;
- R⁷: sofern vorhanden, für C₁-C₆-Alkyl steht.

Derartige Verbindungen (B) weisen in Kombination mit den aminogruppenhaltigen Verbindungen (A) eine hohe Reaktivität auf, ohne die mit Isocyanaten verbundenen Nachteile zu besitzen. Sie eignen sich daher in besonderer Weise als Ersatz für polyfunktionelle Isocyanate in zahlreichen Anwendungen, insbesondere für Beschichtungsmittelzusammensetzungen für die Automobilserienlackierung, die Automobilreparaturlackierung und die Beschichtung von Anbauteilen sowie von Kunststoffen.

Es wurde überraschend gefunden, dass die im Folgenden näher beschriebenen Verbindungen (B) durch Polymerisation unter Verwendung von ethylenisch ungesättigten Monomeren, die eine Alkyliden-1,3-dioxolan-2-on-Gruppe und eine weitere ethylenisch ungesättigte Doppelbindung aufweisen, unter Erhalt der Alkyliden-1,3-dioxolan-2-on-Gruppe hergestellt werden können. Dies ist überraschend, da in der Literatur verschiedentlich beschrieben wird, dass die Methylengruppe in Methylen-1,3-dioxolan-2-onen unter radikalischen Bedingungen polymerisiert, siehe beispielsweise in Journal of Network Polymer, Japan 2005, 26, 132-137, Makromol. Chem., Rapid Commun. 1989, 10, 453-456.

Die erfindungsgemäß eingesetzten Verbindungen (B) sind daher erhältlich unter Verwendung von mindestens einem Monomer (B1) der Formel (I) 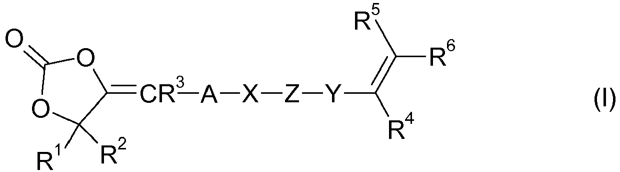 wobei
- R¹, R² , R³, R⁴, R⁵, R⁶, A, X, Z, Y, R⁷ und R⁸: die in Anspruch 1 angegebene Bedeutung haben,
und
mindestens zwei unterschiedlichen, jeweils von dem Monomer (B1) verschiedenen, Comonomeren (B2) und (B3).

Hier und im Folgenden gibt das zur Definition von Substituenten und chemischen Verbindungen verwendete Präfix "Cₙ-Cₘ-" die Anzahl möglicher C-Atome des Substituenten bzw. der Verbindung an.

Werden keine anderen Angaben gemacht, so gelten im Rahmen der vorliegenden Erfindung für die im Zusammenhang mit den Substituenten verwendeten Begriffe die folgenden allgemeinen Definitionen:
"Alkyl" steht für einen linearen oder verzweigten Alkylrest mit beispielsweise 1 bis 4 (C₁-C₄-Alkyl), 1 bis 6 (C₁-C₆-Alkyl) oder 1 bis 20 Kohlenstoffatomen (C₁-C₂₀-Alkyl). Beispiele für C₁-C₄-Alkyl sind Methyl, Ethyl, n-Propyl, iso-Propyl, n-Butyl, 2-Butyl, iso-Butyl, tert.-Butyl (2-Methylpropan-2-yl). Beispiele für C₁-C₆-Alkyl sind neben den für C₁-C₄-Alkyl genannten Bedeutungen weiterhin n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl und 1-Ethyl-2-methylpropyl. Beispiele für C₁-C₂₀-Alkyl sind neben den für C₁-C₆-Alkyl genannten Bedeutungen weiterhin Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, Nonadecyl, Eicosyl und deren Konstitutionsisomere.

"C₁-C₄-Alkoxy-C₁-C₄-alkyl" steht für eine über ein Sauerstoffatom gebundene Alkylgruppe mit 1 bis 4 Kohlenstoffatomen, wie z. B. Methoxy, Ethoxy, n-Propoxy, 1-Methylethoxy (Isopropoxy), n-Butoxy, 1-Methylpropoxy (sec.-Butoxy), 2-Methylpropoxy (Isobutoxy) oder 1,1-Dimethylethoxy (tert.-Butoxy), die in Form einer Etherbindung über den Sauerstoff an eine wie zuvor definierte C₁-C₄-Alkylgruppe gebunden ist. Beispiele sind Methoxymethyl, 2-Methoxyethyl, Ethoxymethyl, 3-Methoxypropyl, 3-Ethoxypropyl.

"C₅-C₆-Cycloalkyl" steht für einen cyclischen Alkylrest mit 5 bis 6 Kohlenstoffatomen. Beispiele sind Cyclopentyl und Cyclohexyl.

"Phenyl-C₁-C₄-alkyl" steht für eine Phenylgruppe, die an eine wie zuvor definierte C₁-C₄-Alkylgruppe gebunden ist. Beispiele sind Benzyl, Phenylethyl, Phenylpropyl, Phenylbutyl.

"C₁-C₄-Alkandiyl" steht für ein Alkandiyl mit 1 bis 4 Kohlenstoffatomen. Beispiele sind Methandiyl, 1,1-Ethandiyl, 1,2-Ethandiyl, 1-Methyl-1,1-ethandiyl, 1-Methyl-1,2-ethandiyl, 1,3-Propandiyl, 1,4-Butandiyl, 1,1-Dimethyl-1,2-ethandiyl und 1,2-Dimethyl-1,2-ethandiyl.

"C₁-C₈-Alkoxy" steht für eine über ein Sauerstoffatom gebundene Alkylgruppe mit 1 bis 8 Kohlenstoffatomen. Beispiele sind Methoxy, Ethoxy, n-Propoxy, 1-Methylethoxy (Isopropoxy), n-Butoxy, 1-Methylpropoxy (sec.-Butoxy), 2-Methylpropoxy (Isobutoxy), 1,1-Dimethylethoxy (tert.-Butoxy), n-Pentoxy, 1-Methylbutoxy, 2-Methylbutoxy, 3-Methylbutoxy, 1,1-Dimethylpropoxy, 1,2-Dimethylpropoxy, 2,2-Dimethylpropoxy, 1-Ethylpropoxy, 2-Ethylpropoxy, n-Hexoxy, 1-Methylpentoxy, 2-Methylpentoxy, 3-Methylpentoxy, 4-Methylpentoxy, 1-Ethylbutoxy, 2-Ethylbutoxy, 3-Ethylbutoxy, 1,2-Dimethylbutoxy, 1,3-Dimethylbutoxy, 2,3-Dimethylbutoxy, 1-Ethyl-2-methylpropoxy und 1-Isopropylpropoxy.

"C₁-C₄-Alkylcarbonyl" steht für einen über eine Carbonylgruppe gebundenen C₁-C₄-Alkylrest wie zuvor definiert, z. B. für Acetyl, Propionyl, Butyryl, Pivaloyl etc.

Im Hinblick auf bevorzugte Ausführungsformen der Erfindung weisen die Reste bzw. Gruppen R¹, R², R³, R⁴, R⁵, R⁶, R⁷, R⁸, A, X, Z und Y in den Verbindungen der Formel I und den Gruppen der Formel I' unabhängig voneinander vorzugsweise eine oder mehrere oder alle der folgenden Bedeutungen auf:
- R¹: steht für Wasserstoff oder C₁-C₆-Alkyl, insbesondere für Wasserstoff oder C₁-C₄-Alkyl und speziell für Methyl oder Ethyl;
- R²: steht für Wasserstoff oder C₁-C₆-Alkyl, insbesondere für C₁-C₄-Alkyl und speziell für Methyl oder Ethyl;
- R³: steht für Wasserstoff;
- A: steht für C₁-C₄-Alkandiyl, insbesondere für Methandiyl, 1,2-Ethandiyl oder 1,3-Propandiyl, besonders bevorzugt 1,2-Ethandiyl;
- X: steht für O;
- Z: steht für C=O;
- Y: steht für eine chemische Bindung;
- R⁴: steht für Wasserstoff oder C₁-C₄-Alkyl, insbesondere für Wasserstoff oder Methyl;
- R⁵: steht für Wasserstoff;
- R⁶: steht für Wasserstoff;
- R⁷: sofern vorhanden, steht für C₁-C₄-Alkyl;
- R⁸: sofern vorhanden, steht für C₁-C₄-Alkyl.

Die Herstellung der Verbindungen der Formel I gelingt in der Regel durch das im Folgenden näher erläuterte Verfahren, bei dem man eine Verbindung der allgemeinen Formel II mit einer Verbindung der allgemeinen Formel III umsetzt:

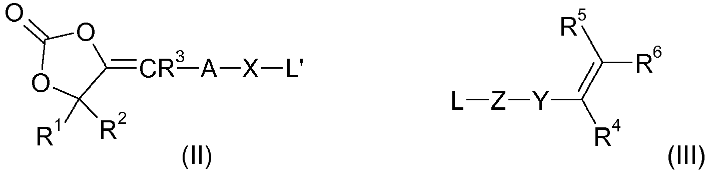

In Formel II steht L' für Wasserstoff oder eine Hydroxyl- oder Amino-Schutzgruppe, z. B. eine C₁-C₄-Alkylcarbonylgruppe. Die Variablen A, X, R¹, R² und R³ weisen die oben genannten Bedeutungen, insbesondere die als bevorzugt genannten Bedeutungen, auf.

In Formel III steht L für eine nucleophil verdrängbare Abgangsgruppe, beispielsweise Halogen, OH oder C₁-C₈-Alkoxy. Die Variablen Y, Z, R⁴, R⁵ und R⁶ weisen die oben genannten Bedeutungen, insbesondere die als bevorzugt genannten Bedeutungen, auf.

Die Umsetzung der Verbindungen der Formeln II und III kann in Analogie zu bekannten Verfahren der nucleophilen Substitution durchgeführt werden. Sofern L'für eine Hydroxyl- oder Amino-Schutzgruppe steht, wird in der Regel diese Schutzgruppe vor der Umsetzung von Verbindung II mit Verbindung III entfernt, oder es werden Reaktionsbedingungen gewählt, unter denen die Schutzgruppe abgespalten wird, so dass der eigentliche Reaktant die Verbindung der Formel II ist, worin L' für Wasserstoff steht.

Gemäß einer bevorzugten Ausführungsform der Erfindung stehen in Formel III die Variablen Z für C=O und L für OH oder C₁-C₈-Alkoxy. In diesem Fall gelingt die Umsetzung von Verbindung III mit Verbindung II, gegebenenfalls nach Entfernung der Hydroxyl- oder Amino-Schutzgruppe, im Sinne einer Amidierung oder Veresterungs- bzw. Umesterungsreaktion.

Insbesondere eignet sich die Veresterung bzw. Umesterung für die Herstellung von Verbindungen der Formel I, worin Z für C=O und X für O steht, A für C₁-C₄-Alkandiyl steht, R⁴ Wasserstoff oder C₁-C₄-Alkyl, speziell Wasserstoff oder Methyl, bedeutet und R⁵ und R⁶ für Wasserstoff stehen. In diesem Fall sind bevorzugte Reaktanten der Formel III ausgewählt unter den C₁-C₈-Alkylestern der Acrylsäure und der Methacrylsäure, im Folgenden (Meth)acrylsäure-C₁-C₈-alkylester, z. B. (Meth)acrylsäuremethyl-, - ethyl-, -n-butyl- und -2-ethylhexylester und ganz besonders bevorzugt (Meth)acrylsäure-C₁-C₄-alkylester, z. B. (Meth)acrylsäuremethyl-, -ethyl- und -n-butylester.

Gemäß einer besonders bevorzugten Ausführungsform der Erfindung stehen in Formel III die Variablen L für OH oder C₁-C₈-Alkoxy, Z für C=O und in Formel II X für O und die Umsetzung von Verbindung II mit Verbindung III wird unter den Bedingungen einer Veresterung oder Umesterung durchgeführt. In einer speziellen Ausgestaltung dieser Ausführungsform steht L' in Formel II für Wasserstoff oder eine C₁-C₄-Alkylcarbonylgruppe, speziell eine Acetylgruppe.

In einer bevorzugten Ausführungsform erfolgt die Herstellung der Verbindungen der Formel I durch Veresterung bzw. Umesterung unter Enzym-Katalyse.

Die Enzym-katalysierte Veresterung bzw. Umesterung kann in Analogie zu den in Biotechnol. Lett. 1990, 12, 825-830, Biotechnol. Lett. 1994, 16, 241-246, US 5240835, WO 2004/05088 oder DE 102009003035 beschriebenen Methoden durchgeführt werden, auf die hier vollumfänglich Bezug genommen wird.

Für die Enzym-katalysierte Veresterung bzw. Umesterung einsetzbare Enzyme (E) sind beispielsweise ausgewählt unter Hydrolasen, Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen. Besonders bevorzugt sind Novozym® 435 der Fa. Novozymes (Lipase aus Candida antarctica B) oder Lipase aus Aspergillus sp., Aspergillus niger sp., Mucor sp., Penicillium cyclopium sp., Geotricum candidum sp., Rhizopus javanicus, Burkholderia sp., Candida sp., Pseudomonas sp. oder Schweinepankreas, ganz besonders bevorzugt sind Lipase aus Candida antarctica B oder aus Burholderia sp.

Der Enzymgehalt im Reaktionsmedium liegt in der Regel im Bereich von etwa 0,1 bis 10 Gew.-%, bezogen auf die Summe der eingesetzten Reaktanten der Formel II und III.

Die Herstellung der Verbindungen der Formel I kann auch durch konventionelle Veresterung oder Umesterung unter den hierfür üblichen Reaktionsbedingungen einer säurekatalysierten Veresterung oder einer säure- oder basenkatalysierten Umesterung erfolgen.

Als saure Katalysatoren für eine säurekatalysierte Veresterung eignen sich vor allem Protonensäuren, beispielsweise Schwefelsäure, Natriumhydrogensulfat, Salzsäure, Phosphorsäure, Mononatriumdihydrogenphosphat, Dinatriumhydrogenphosphat, Pyrophosphorsäure, phosphorige Säure, unterphosphorige Säure, Methansulfonsäure, Trifluormethansulfonsäure, p-Toluolsulfonsäure sowie deren Gemische. Geeignet sind auch Lewissäuren wie z. B. Ti- und Sn-Verbindungen. Außerdem geeignet sind saure lonentauscherharze, z. B. sulfonierte oder carboxylierte lonentauscherharze, jeweils in ihrer sauren Form.

Als basische Katalysatoren für eine Umesterung eignen sich Metallhydroxide und/oder -alkoholate, insbesondere von Metallen der 1., 2. und 13. Gruppe des Periodensystems, beispielsweise Alkalimetallhydroxide wie NaOH oder KOH sowie Alkalimetall- und Erdalkalimetallalkanolate, insbesondere die entsprechenden Methanolate oder Ethanolate wie Natrium- oder Kaliummethanolat oder Natrium- oder Kaliumethanolat. Außerdem geeignet sind ionenaustauschende Harze.

Die sauren oder basischen Katalysatoren werden in der Regel in einer Konzentration von 0,0001 Gew.-% bis 20 Gew.-%, bevorzugt 0,001 Gew.-% bis 10 Gew.-%, bezogen auf die gesamte Reaktionsmischung, eingesetzt.

Die Veresterungs- bzw. Umesterungsreaktion von II mit III kann beispielsweise als Batch-Verfahren gestaltet werden. Hierbei wird man in der Regel die Verbindungen der Formeln II und III in ein Reaktionsgefäß geben und unter Zugabe des Katalysators bzw. des Enzyms miteinander umsetzten. Alternativ kann die Veresterungs- bzw. Umesterungsreaktion als Semi-Batch-Verfahren gestaltet werden. Hierzu kann man beispielsweise einen der Reaktanten, z. B. die Verbindung II oder Verbindung III, sowie den Katalysator bzw. das Enzym vorlegen und den anderen Reaktanten im Laufe der Reaktion zuführen. Außerdem kann die Verbindung der Formel I durch kontinuierliche Umsetzung der Verbindung II mit der Verbindung III hergestellt werden. Hierzu wird man beispielsweise die Verbindungen II und III kontinuierlich einer Reaktionszone, welche den Katalysator enthält, zuführen und die Verbindung der Formel I, gegebenenfalls zusammen mit den bei der Reaktion gebildeten Koppelprodukten, z. B. Alkohol oder Ester, kontinuierlich der Reaktionszone entnehmen. Gegebenenfalls wird man den Katalysator bzw. das Enzym ebenfalls der Reaktionszone zuführen. Sowohl bei der Semi-Batch-, als auch bei der kontinuierlichen Umsetzung kann man die Reaktanten, d. h. die Verbindungen der Formeln II und III, vorzugsweise in flüssiger Phase, durch eine Reaktionszone führen, welche den Katalysator bzw. das Enzym als stationäre Phase enthält.

Die Reaktionszeit hängt unter anderem von der Temperatur, der verwendeten Menge und der Aktivität des Säure-, Basen- bzw. Enzymkatalysators und vom geforderten Umsatz ab sowie von der Struktur der Verbindung II. Bevorzugt wird die Reaktionszeit so angepasst, dass der Umsatz der Verbindung II mindestens 70 %, bevorzugt mindestens 80 %, besonders bevorzugt mindestens 90 %, ganz besonders bevorzugt mindestens 95 % und insbesondere mindestens 97 % beträgt. In der Regel sind dafür 1 bis 48 Stunden, bevorzugt 1 bis 12 Stunden und besonders bevorzugt 1 bis 6 Stunden ausreichend.

Die Enzym-katalysierte oder konventionell katalysierte Veresterung bzw. Umesterung erfolgt im Allgemeinen bei Temperaturen im Bereich von 0 bis 100 °C, bevorzugt 20 bis 80 °C und besonders bevorzugt 20 bis 70 °C.

Das molare Verhältnis von Verbindung II zu Verbindung III kann in einem weiten Bereich variiert werden. Vorzugsweise wird die Verbindung III im Überschuss bezogen auf die Stöchiometrie der Umsetzung eingesetzt. Im Allgemeinen liegt das molare Verhältnis von Verbindung II zu Verbindung III im Bereich von 1 : 100 bis 1 : 1, bevorzugt 1 : 50 bis 1 : 1, besonders bevorzugt 1 : 20 bis 1 : 1. Bevorzugt liegt die Verbindung der Formel III im Überschuss vor, so dass sie zusammen mit dem freiwerdenden Koppelprodukt, in der Regel ein Alkohol oder das bei einer Umesterung gebildete Ester-Koppelprodukt (wenn X-L' in Formel II für Alkylcarbonyloxy und Y-L in Formel III für Alkoxycarbonyl steht), unter vermindertem Druck, beispielsweise als Azeotrop, abdestilliert werden kann. Zusätzlich oder alternativ kann das freiwerdende Wasser bzw. der Alkohol bzw. der Ester z. B. mittels Molekularsiebs gebunden werden. Auf diese Weise wird das Reaktionsgleichgewicht zugunsten der Verbindung der Formel I verschoben.

Die Enzym-katalysierte sowie die konventionell katalysierte Veresterung bzw. Umesterung können in organischen Lösungsmitteln oder deren Gemischen oder ohne Zusatz von Lösungsmitteln durchgeführt werden. Die Ansätze sind in der Regel weitgehend wasserfrei (d. h. unter 10 Vol.-%, bevorzugt unter 5 Vol.-%, besonders bevorzugt unter 1 Vol.-% Wassergehalt).

Der Anteil organischer Lösungsmittel am Reaktionsgemisch kann beispielsweise 0,1 bis 50 Gew.-% betragen und liegt, sofern ein Lösungsmittel eingesetzt wird, bevorzugt im Bereich von 0,5 bis 30 Gew.-% oder im Bereich von 1 bis 10 Gew.-%. Vorzugsweise wird kein oder weniger als 1 Gew.-% organisches Lösungsmittel der Enzym- oder konventionell katalysierten Veresterung bzw. Umesterung zugesetzt.

Die Herstellung der Verbindung I kann in Gegenwart mindestens eines Polymerisationsinhibitors durchgeführt werden. Als Polymerisationsinhibitoren können beispielsweise 4-Methoxyphenol (MeHQ), Hydrochinon, 2,5-Di-tert.-butylhydrochinon, 2,6-Di-tert.-butyl-p-cresol, Nitrosoverbindungen wie isoacryl nitrate, Nitrosodiphenylamin, N-Nitrosocyclohexylhydroxylamin, Methylenblau, Phenothiazin oder Diphenylamin eingesetzt werden. Bevorzugt wird 4-Methoxyphenol (MeHQ) als Polymerisationsinhibitor eingesetzt.

Die Polymerisationsinhibitoren werden im Allgemeinen, bezogen auf die Menge der Verbindungen der Formel III, von 1 bis 10000 ppm, bevorzugt von 10 bis 5000 ppm, besonders bevorzugt von 30 bis 2500 ppm und insbesondere von 50 bis 1500 ppm eingesetzt.

Die Verbindungen der Formel III sind bekannt und in der Regel kommerziell erhältlich.

Die Herstellung der Verbindungen der Formel II kann in Analogie zu bekannten Verfahren zur Herstellung von Alkyliden-1,3-dioxolan-2-onen erfolgen, wie sie beispielsweise im eingangs zitierten Stand der Technik beschrieben werden. Bevorzugte Verbindungen der Formel II, worin R³ für Wasserstoff steht, können beispielsweise durch Umsetzung der Verbindung der Formel IV mit CO₂, vorzugsweise unter Einsatz eines Katalysators, hergestellt werden (siehe Schema 1):

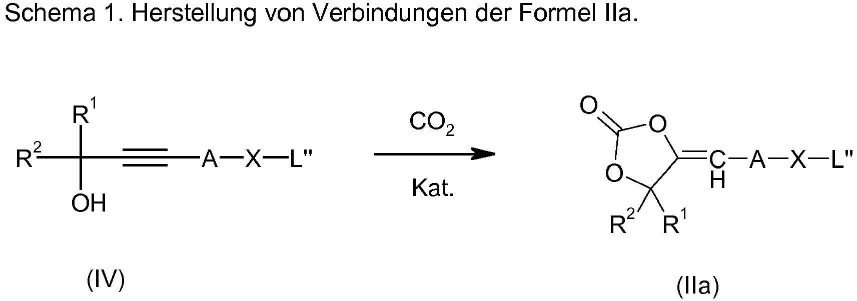

In Schema 1 haben R¹, R², A und X die zuvor genannten Bedeutungen. L" steht für eine Alkohol- oder Amino-Schutzgruppe und insbesondere für C₁-C₄-Alkylcarbonyl, speziell für Acetyl. X steht insbesondere für Sauerstoff. A steht insbesondere für C₁-C₄-Alkandiyl.

Als Katalysatoren kommen grundsätzlich Übergangsmetallkatalysatoren in Frage, die als aktives Metall beispielsweise Silber, Kupfer, Gold, Palladium oder Platin enthalten, z. B. Silbersalze wie Silberacetat, Silbercarbonat, Kupfer(II)-Salze wie Kupferacetat oder Kupfer(I)-Halogenide wie CuI, CuBr, CuCI, weiterhin Palladium(0)-Katalysatoren, wobei die vorgenannten Übergangsmetall-Verbindungen gegebenenfalls in Kombination mit einem organischen Amin, z. B. einem Tri-C₁-C₆-alkylamin wie Triethylamin oder einer Amidin-Base wie 1,5-Diazabicyclo[4.3.0]non-5-en (DBN) oder 1,8-Diazabicyclo[5.4.0]undec-7-en (DBU), oder mit einem organischen Phosphin, z. B. Trialkylphosphinen oder Triarylphosphinen wie Tributylphosphin und Triphenylphosphin, oder in Kombination mit einer Mischung aus einem der vorgenannten Phosphine mit einem Ammoniumsalz, wie beispielsweise Tri-C₁-C₆-alkylammoniumhalogeniden oder Tetra-C₁-C₆-alkylammoniumhalogeniden, eingesetzt werden können. Als Katalysatoren kommen weiterhin organische Phosphine als solche, z. B. Trialkylphosphine oder Triarylphosphine wie Tributylphosphin oder Triphenylphosphin, sowie sterisch gehinderte Carbene, z. B. 1,3-substituierte 2,3-Dihydroimidazol-2-yliden-Verbindungen wie 1,3-Diisopropyl-2,3-dihydro-4,5-imidazol-2-yliden oder deren CO₂-Addukte, sowie Kombinationen davon mit den vorgenannten Phosphinen in Betracht. Die Reaktion kann drucklos oder vorzugsweise unter erhöhtem Druck, z. B. bei 50 bis 500 bar, oder in überkritischem CO₂ durchgeführt werden. Bezüglich der Reaktionsbedingungen wird auf die zuvor genannte Literatur verwiesen.

Anstelle von CO₂ kann auch ein Carbonsäureanhydrid wie beispielsweise Bis-(tert.-butyl)dikohlensäureanhydrid (Boc₂O) eingesetzt werden. In diesem Fall erfolgt die Umsetzung üblicherweise in zwei Stufen, wobei man in der ersten Stufe die Verbindung IV mit einem Ester des Biskohlensäureanhydrids, z. B. mit Boc₂O, in Gegenwart einer Base, beispielsweise Natriumhydrid, umsetzt und den dabei erhaltenen Ester in Gegenwart eines Übergangsmetallkatalysators, z. B. eines goldhaltigen Katalysators, cyclisiert. Eine derartige Vorgehensweise ist beispielsweise in Org. Lett. 2006, 8, 515-518 beschrieben, auf die hiermit Bezug genommen wird.

In den erfindungsgemäßen Beschichtungsmittelzusammensetzungen werden bevorzugt Verbindungen (B) eingesetzt, bei denen in der Formel (I') R¹ und R² jeweils für Wasserstoff oder C₁-C₆-Alkyl, insbesondere für Methyl stehen und/oder R³ für Wasserstoff steht. Ebenfalls bevorzugt werden Verbindungen (B) eingesetzt, bei denen in der Formel (I') A für Ethandiyl, X für O, Z für C=O und Y für eine chemische Bindung steht und die erhältlich sind durch die Verwendung der entsprechenden Monomeren (B1).

Bevorzugt ist die Verbindung (B) erhältlich unter Verwendung von wenigstens 10 Gew.-%, bezogen auf die Gesamtmenge der das Polymer bildenden ethylenisch ungesättigten Verbindungen, wenigstens eines Monomers (B1) der Formel I 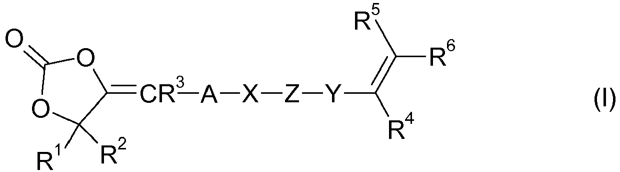 worin A, X, Y, Z, R¹, R² und R³ die in einem der vorhergehenden Ansprüche genannten Bedeutungen aufweisen und
- R⁴: für Wasserstoff, C₁-C₄-Alkyl, CH₂COOR⁸, Phenyl oder Phenyl-C₁ C₄-alkyl steht;
- R⁵, R⁶: unabhängig voneinander für Wasserstoff oder C₁-C₄-Alkyl stehen oder einer der Reste R⁵ oder R⁶ auch für COOR⁸ oder CH₂COOR⁸ stehen kann,
- R⁸: sofern vorhanden, für Wasserstoff oder C₁-C₆-Alkyl steht.

In einer besonders bevorzugten Ausführungsform der vorliegenden Erfindung ist die Verbindung (B) erhältlich unter Verwendung von 10 bis 80, bevorzugt 25 bis 70 Gew.-% und besonders bevorzugt 35 bis 65 Gew.-%, mindestens eines Monomers (B1) der Formel I und 20 bis 90 Gew.-%, bevorzugt 30 bis 75 Gew.-% und besonders bevorzugt 35 bis 65 Gew.-%, mindestens zweier unterschiedlicher, jeweils von (B1) verschiedener Comonomerer (B2) und (B3) sowie ggf. (B4), ggf. (B5), ggf. (B6) bis ggf. (Bn), wobei die Gew.-% Angaben jeweils bezogen sind auf das Gesamtgewicht aller zur Herstellung der Verbindung (B) eingesetzten Monomere (B1) plus (B2) plus (B3) plus ggf. (B4) bis (B7) plus ggf. weiterer eingesetzter Comonomerer (Bn). Die Summe aller Gewichtsanteile aller Monomerer (B1) plus aller Comonomerer (B2) bis (Bn) ergibt entsprechend stets 100 Gew.-%.

Die Verbindung (B) ist besonders bevorzugt erhältlich unter Verwendung von 2 bis 6 voneinander verschiedenen monoethylenisch ungesättigten Comonomeren (B2) bis (B7).

Bevorzugt sind die Comonomere (B2), (B3), (B4), (B5), (B6), (B7) und ggf. weitere Comonomere (Bn) ausgewählt aus der Gruppe der vinylaromatischen Verbindungen und der Ester monoethylenisch ungesättigter aliphatischer Monocarbonsäuren mit aliphatischen Alkanolen oder der Ester monoethylenisch ungesättigter aliphatischer Monocarbonsäuren mit cycloaliphatischen Alkanolen oder Mischungen aus mindestens 2 dieser Comonomeren.

Besonders bevorzugt sind die Comonomere (B2), (B3), (B4), (B5), (B6), (B7) und ggf. weitere Comonomere (Bn) ausgewählt aus der Gruppe der Ester monoethylenisch ungesättigter aliphatischer C₃-C₆-Monocarbonsäuren mit C₁-C₈-Alkanolen oder der Ester monoethylenisch ungesättigter aliphatischer C₃-C₆-Monocarbonsäuren mit C₅-C₈-Cycloalkanolen oder der vinylaromatischen Verbindungen oder Mischungen aus mindestens 2 dieser Comonomeren.

Beispiele für als Comonomere (B2), (B3), (B4), (B5), (B6), (B7) und ggf. weitere Comonomere (Bn) geeignete Ester monoethylenisch ungesättigter aliphatischer Monocarbonsäuren mit aliphatischen Alkanolen sind insbesondere die Ester der Acrylsäure und Methacrylsäure wie Methylacrylat, Ethylacrylat, n-Butylacrylat, 2-Butylacrylat, Isobutylacrylat, tert.-Butylacrylat und 2-Ethylhexylacrylat, Methylmethacrylat, Ethylmethacrylat, n-Butylmethacrylat, 2-Butylmethacrylat, Isobutylmethacrylat, tert.-Butylmethacrylat, 2-Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, sowie die entsprechenden Ester der Crotonsäure und Isocrotonsäure.

Beispiele für als Comonomere (B2), (B3), (B4), (B5), (B6), (B7) und ggf. weitere Comonomere (Bn) geeignete Ester monoethylenisch ungesättigter Monocarbonsäuren mit cycloaliphatischen Alkanolen sind Ester der Acrylsäure und Methacrylsäure wie Cyclopentylacrylat, Cyclohexylacrylat, Cyclopentylmethacrylat, Cyclohexylmethacrylat, Isobornylacrylat, Isobornylmethacrylat sowie die entsprechenden Ester der Crotonsäure und Isocrotonsäure.

Beispiele für als Comonomere geeignete vinylaromatische Kohlenwasserstoffe sind Styrol, α-Methylstyrol und die Vinyltoluolisomere.

Es können als Comonomer (B2), (B3) (B4), (B5), (B6), (B7) und ggf. weitere Comonomere (Bn) dabei
- Mischungen von mindestens zwei, bevorzugt 2 bis 6, verschiedenen Estern monoethylenisch ungesättigter aliphatischer Monocarbonsäuren mit aliphatischen Alkanolen oder
- Mischungen von mindestens zwei, bevorzugt 2 bis 6, verschiedenen Estern monoethylenisch ungesättigter aliphatischer Monocarbonsäuren mit cycloaliphatischen Alkanolen oder
- Mischungen von mindestens zwei, bevorzugt 2 bis 6, verschiedenen vinylaromatischen Kohlenwasserstoffen
eingesetzt werden.

Besonders bevorzugt werden als Comonomer (B2), (B3) (B4), (B5), (B6), (B7) und ggf. weitere Comonomere (Bn) eingesetzt
- Mischungen von mindestens zwei, bevorzugt 2 bis 6, verschiedenen Comonomeren aus mindestens einem Ester monoethylenisch ungesättigter C3-C6-Monocarbonsäuren mit C1-C8-Alkanolen mit mindestens einem vinylaromatischen Kohlenwasserstoff oder
- Mischungen von mindestens zwei, bevorzugt 2 bis 6, verschiedenen Comonomeren aus mindestens einem Ester monoethylenisch ungesättigter C3-C6-Monocarbonsäuren mit C1-C8-Alkanolen mit mindestens einem Ester monoethylenisch ungesättigter C3-C6-Monocarbonsäuren mit C5-C8-Cycloalkanolen oder
- Mischungen von mindestens zwei, bevorzugt 2 bis 6, verschiedenen Comonomeren aus mindestens einem Ester monoethylenisch ungesättigter C3-C6-Monocarbonsäuren mit C5-C8-Cycloalkanolen mit mindestens einem vinylaromatischen Kohlenwasserstoff oder
- Mischungen von 3 bis 6 verschiedenen Comonomeren aus mindestens einem Ester monoethylenisch ungesättigter C3-C6-Monocarbonsäuren mit C1-C8-Alkanolen mit mindestens einem Ester monoethylenisch ungesättigter C3-C6-Monocarbonsäuren mit C5-C8-Cycloalkanolen und mit mindestens einem vinylaromatischem Kohlenwasserstoff.

Ganz besonders bevorzugt wird eine Mischung aus einem vinylaromatischen Kohlenwasserstoff und 2 bis 4 verschiedenen Alkylestern von C1-C8-Alkanolen mit Acrylsäure und/oder mit Methacrylsäure eingesetzt.

Die erfindungsgemäß eingesetzten Verbindungen (B) weisen in der Regel ein zahlenmittleres Molekulargewicht im Bereich von 300 bis 100.000 Dalton, insbesondere im Bereich von 500 bis 15.000 Dalton, besonders bevorzugt von 900 bis 10.000 Dalton, und gewichtsmittlere Molekulargewichte zwischen 500 und 200.000 Dalton, bevorzugt 500 bis 20.000 Dalton, und besonders bevorzugt zwischen 1000 und 15000 Dalton, auf, jeweils gemessen mittels Gelpermeationschromatographie (GPC) gegen einen Polystyrolstandard.

Die Polymerisation der Monomere kann nach üblichen Verfahren der radikalischen Polymerisation durchgeführt werden. Hierzu zählen Lösungs- und Fällungspolymerisation, Suspensionspolymerisation und Emulsionspolymerisation, einschließlich einer Miniemulsionspolymerisation. Insbesondere erfolgt die Polymerisation mit der Lösungspolymerisation.

Geeignete Lösungs- oder Verdünnungsmittel sind insbesondere solche, in dem die zu polymerisierenden Monomere löslich sind. Geeignete Lösungsmittel umfassen insbesondere aprotische Lösungsmittel. Hierzu zählen aliphatische und cycloaliphatische Kohlenwasserstoffe und Halogenkohlenwasserstoffe, aromatische Kohlenwasserstoffe und aromatische Halogenkohlenwasserstoffe, Alkylester und Cycloalkylester aliphatischer Monocarbonsäuren, N,N-Dialkylamide von aliphatischen Carbonsäuren, alicyclische und cyclische Ketone, Ether sowie Gemische der vorgenannten aprotischen Lösungsmittel.

In der Regel wird man das organische Lösungsmittel so bemessen, dass die Menge der zu polymerisierenden Monomere, bezogen auf die Gesamtmenge an Monomeren plus Lösungsmittel, im Bereich von 10 bis 65 Gew.-%, insbesondere im Bereich von 20 bis 60 Gew.-% liegt. Bei einer Lösungspolymerisation werden dementsprechend Polymerlösungen mit Feststoffgehalten im Bereich von 10 bis 90 Gew.-% und insbesondere 20 bis 80 Gew.-% erhalten.

Die Polymerisation der Monomere kann nach üblichen Verfahren der radikalischen Homo- oder Copolymerisation erfolgen. In der Regel wird man hierzu die Monomere unter Reaktionsbedingungen polymerisieren, bei denen sich Radikale bilden.

Die Bildung der Radikale erfolgt in der Regel durch Einsatz eines sogenannten Polymerisationsinitiators, d. h. einer Verbindung, die beim Zerfall, der chemisch, thermisch oder photochemisch ausgelöst werden kann, Radikale bildet.

Zu den geeigneten Polymerisationsinitiatoren zählen organische Azoverbindungen, organische Peroxide und Hydroperoxide, anorganische Peroxide und sogenannte Redoxinitiatoren.

Insbesondere hat es sich bewährt, einen geringen Teil der Monomere, z. B. 0,1 bis 20 Gew.-%, bezogen auf die Gesamtmenge der zu polymerisierenden Monomere, gegebenenfalls zusammen mit einer Teilmenge oder der Gesamtmenge an Polymerisationsinitiator und einem Teil oder der Gesamtmenge des Lösungs- bzw. Verdünnungsmittels, im Polymerisationsgefäß vorzulegen, die Polymerisation zu starten, beispielsweise durch Erwärmen der Polymerisationsmischung, und dann die Restmenge der Monomere und, sofern erforderlich, die Restmenge an Polymerisationsinitiator und Lösungsmittel im Verlauf der Polymerisation zuzugeben.

Die für die Polymerisation üblicherweise angewendeten Polymerisationstemperaturen liegen, abhängig von dem gewählten Initiatorsystem, in der Regel im Bereich von 20 bis 200 °C, insbesondere im Bereich von 40 bis 180 °C und speziell im Bereich von 80 bis 160 °C.

Der Polymerisationsdruck ist von untergeordneter Bedeutung und kann im Bereich von Normaldruck oder leichtem Unterdruck, z. B. > 800 mbar, oder bei Überdruck, z. B. bis 10 bar, liegen, wobei höhere oder niedrigere Drücke ebenfalls angewendet werden können.

Die Polymerisationsdauer wird in der Regel 10 Stunden nicht überschreiten und liegt häufig im Bereich von 1 bis 8 Stunden.

Bevorzugt werden erfindungsgemäß Beschichtungsmittelzusammensetzungen eingesetzt, die von 97 bis 70 Gew.-%, besonders bevorzugt von 95 bis 75 Gew.-%, der Polycarbonat-Komponente (B) enthalten, wobei die Gew.-%-Angaben jeweils bezogen sind auf den Bindemittelanteil des Beschichtungsmittels [also bezogen auf das Gesamtgewicht des Bindemittelanteils der erfindungsgemäßen Verbindungen (B) plus des Bindemittelanteils des Polyamins (A) plus Gewicht des ggf. eingesetzten Katalysators (D)].

### Katalysator (D)

Die erfindungsgemäßen Beschichtungsmittelzusammensetzungen können ggf. mindestens einen Katalysator (D) für die Vernetzung enthalten. Die Katalysatoren werden, sofern erwünscht, in Anteilen von 0,01 Gew.-% bis etwa 10 Gew.-%, insbesondere 0,1 bis 5 Gew.-%, bezogen auf den Bindemittelanteil des Beschichtungsmittels [also bezogen auf das Gesamtgewicht des Bindemittelanteils der erfindungsgemäßen Verbindungen (B) plus des Bindemittelanteils des Polyamins (A) plus Gewicht des ggf. eingesetzten Katalysators (D)] eingesetzt.

Beispiele für geeignete Katalysatoren sind insbesondere von der Komponente (A) verschiedene cyclische und bicyclische Amine, wie beispielsweise 1,4-Diazabicyclo[2.2.2]octan, 4-(Dimethylamino)-pyridin, 1,5-Diazabicyclo[4,3,0]non-5-en, 1,8-Diazabicyclo[5.4.0]undec-7-en, 1,5,7-Triazabicyclo-[4.4.0]dec-5-en. Als Katalysator (D) geeignet sind ferner auch Amidine der Formel (DI) und deren Derivate, insbesondere auf Basis eines Zink-Amidin-Komplexes, der herstellbar ist durch Umsetzung von einem oder mehreren Zink(II)biscarboxylaten mit einem Amidin der Formel (DI) oder mit einer Mischung aus zwei oder mehreren Amidinen der Formel (DI) 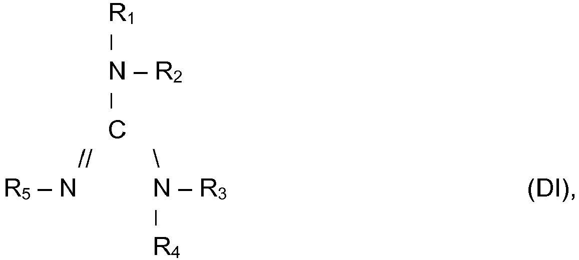 wobei R₅ = Wasserstoff und R₁, R₂, R₃, und R₄ jeweils gleiche oder verschiedene Reste sind, wobei R₁ und R₃ Wasserstoff oder ein Alkylrest oder ein Arylrest sind und R₂ und R₄ ein Alkylrest oder ein Arylrest sind.

Derartige Amidine sowie deren Derivate sind beispielsweise in der WO2012/123166, der WO 2012/123161 und der WO 2012/123198 beschrieben. Ferner sind auch die in der WO 2012/126796 und der WO 2013/110712 genannten Imidazole und deren Derivate als Katalysatoren geeignet.

### Die Kombination der Komponenten (A), (B), ggf. (D) sowie weitere Komponenten der Beschichtungsmittelzusammensetzungen

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die polyaminogruppenhaltige Verbindung (A) sowie weitere nachfolgend beschriebene Komponenten, mit einer weiteren Lackkomponente, enthaltend die carbonatgruppen-haltige Verbindung (B) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die polyaminogruppenhaltige Komponente (A) kann in einem geeigneten Lösemittel vorliegen. Geeignete Lösemittel sind solche, die eine ausreichende Löslichkeit der polyaminogruppenhaltigen Komponente ermöglichen.

Die Gewichtsanteile des Polyamins (A) und der Verbindungen (B) werden vorzugsweise solchermaßen gewählt, dass das molare Äquivalentverhältnis der Aminogruppen der polyaminogruppenhaltigen Verbindung (A) zu den Carbonatgruppen (I') der Komponente (B) zwischen 1:0,5 und 1:1,5, bevorzugt zwischen 1:0,8 und 1:1,2 besonders bevorzugt zwischen 1:0,85 und 1:1,15, liegt.

Die polyaminogruppenhaltige Komponente (A) und/oder die Polycarbonat-Komponente (B) können in einem geeigneten Lösemittel vorliegen.

Als Lösemittel (L) für die erfindungsgemäßen Beschichtungsmittel sind insbesondere solche geeignet, die im Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel sind aliphatische und/oder aromatische Kohlenwasserstoffe wie Toluol, Xylol, Solventnaphta®, Solvesso 100 oder Hydrosol ® (Fa. ARAL), Alkohole, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Das bzw. die Lösemittel werden in den erfindungsgemäßen Beschichtungsmittelzusammensetzungen bevorzugt in einer solchen Menge eingesetzt, dass der Bindemittelgehalt der Beschichtungsmittelzusammensetzung mindestens 50 Gew.-%, besonders bevorzugt mindestens 60 Gew.-% beträgt. Dabei ist zu berücksichtigen, dass im Allgemeinen mit höherem Festkörpergehalt die Viskosität der Beschichtungsmittelzusammensetzung zunimmt und der Verlauf der Beschichtungsmittelzusammensetzung und somit der optische Gesamteindruck der gehärteten Beschichtung schlechter wird.

Darüber hinaus kann die erfindungsgemäße Bindemittelmischung bzw. die erfindungsgemäße Beschichtungsmittelzusammensetzung mindestens ein übliches und bekanntes, von den Komponenten (A), (B) und (D) verschiedenes Lackadditiv (F) in wirksamen Mengen, d.h. in Mengen vorzugsweise bis zu 30 Gew.-%, besonders bevorzugt bis zu 20 Gew.-% und insbesondere bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von der Komponente (A) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von der Komponente (A) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- Rheologiehilfsmittel, beispielsweise auf Basis üblicher hydrophiler und/oder hydrophober pyrogener Kieselsäure, wie verschiedene Aerosil®-Typen, oder übliche Rheologiehilfsmittel auf Harnstoff-Basis
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Besonders bevorzugt sind Beschichtungsmittelzusammensetzungen, die 5 bis 25 Gew.-%, bezogen auf den Bindemittelanteil der Beschichtungsmittelzusammensetzung, mindestens einer polyaminogruppenhaltigen Verbindung (A)
95 bis 75 Gew.-%, bezogen auf den Bindemittelanteil der Beschichtungsmittelzusammensetzung, der Polycarbonatgruppen-haltigen Verbindung (B),
0 bis 10 Gew.-%, bezogen auf den Bindemittelanteil der erfindungsgemäßen Beschichtungsmittelzusammensetzung, mindestens eines Katalysators (D),
0 bis 20 Gew.-%, bezogen auf den Bindemittelanteil der Beschichtungsmittelzusammensetzung, mindestens eines üblichen und bekannten Lackadditivs (F)
enthalten.

Der Bindemittelanteil der Beschichtungsmittelzusammensetzung wird vor der Vernetzung dadurch bestimmt, dass eine kleine Probe (P) der Beschichtungsmittelzusammensetzung eingewogen und daran anschließend der Festkörper bestimmt wird, indem für 60 Minuten bei 130°C getrocknet wird, abgekühlt wird und dann erneut gewogen wird. Der Rückstand entspricht dem Bindemittelanteil der Probe (P). Der Bindemittelanteil der Beschichtungsmittelzusammensetzung in Gew.-% ergibt sich dann entsprechend aus 100 multipliziert mit dem Quotient aus dem Gewicht des Rückstandes der Probe (P) nach Trocknung bei 130°C geteilt durch das Gewicht der Probe (P) vor der Trocknung.

Der Bindemittelanteil der einzelnen Komponenten (A) bzw. (B) des Beschichtungsmittels wird analog dadurch bestimmt, dass eine kleine Probe (P) der jeweiligen Komponente (A) bzw. (B) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe (P) nach Trocknung bei 130°C geteilt durch das Gewicht der jeweiligen Probe (P) vor der Trocknung.

Falls als Komponente (A) Polyamine eingesetzt werden, die unter Normaldruck von 1013 mbar und 25°C flüssig sind, so bezieht sich der Bindemittelanteil für die Komponente (A) auf das eingewogene Gewicht des Polyamins (A) ohne Lösemittel bzw. bei Lösungen auf das aus der für die Lösung angegebenen Konzentration rechnerisch ermittelte Gewicht des Polyamins (A).

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05: 1 und 1,5: 1 liegt, jeweils bezogen auf den Bindemittelanteil der Beschichtungsmittelzusammensetzung .

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittel eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/- Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtezeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

### Herstellung von 5-Methyl-hex-3-in-1,5-diol

Die Synthese erfolgte analog Bull. Acad. Sci. USSR 1965, 683.

In einem 8-L-Reaktor mit 3-stufigem 2-blättrigem, versetztem Scherblattrührer und Thermostat wurden bei 20 °C unter N₂-Atmosphäre 100,0 g (1,384 mol) 3-Butin-1-ol (Reinheit 97,0 %, Fa. Acros) in 3,92 L Toluol (Reinheit 99,9 %, Fa. BASF SE) gelöst und unter Rühren 320,0 g (4,848 mol) KOH (Reinheit 85,0 %, Fa. BASF SE) hinzugegeben. Innerhalb von 20 min wurde eine Mischung von 441,0 ml (6,00 mol) Aceton und 320,9 ml Toluol hinzugegeben. Zu dem Reaktionsansatz wurden langsam 3 l vollentsalztes Wasser gegeben, um den Feststoff vollständig zu lösen. Die Phasen wurden getrennt und die wässrige Phase wurde zweimal mit je 2 L Ethylacetat extrahiert. Das Lösungsmittel der vereinigten organischen Phasen wurde im Vakuum (50 °C, ca. 5 mbar) entfernt. Man erhielt 183,5 g des Produktes.

Die Identität des Produkts mit der Titelverbindung wurde gaschromatographisch überprüft (GC-Methode: ESMA6F, 30 m RTX-5-Amin 1 µm.32mm/80-0-R: 15 °C/min-250).

### Herstellung von Essigsäure-5-hydroxy-5-methyl-hex-3-inylester

100 g (0,78 mol) 5-Methyl-hex-3-in-1,5-diol wurden in 800 ml Dichlormethan gelöst und auf 0°C gekühlt. 113 ml (1,11 mol) Essigsäureanhydrid wurden in einer Portion hinzugegeben. 127 ml (1,25 mol) Triethylamin wurden auf 0-2°C gekühlt und innerhalb von 20 min hinzugegeben. Die Reaktionsmischung wurde 2 h bei 0 °C gerührt. Die Kühlung wurde entfernt und der Reaktionsansatz wurde 16 h bei 20°C gerührt. Die Mischung wurde auf 0°C gekühlt und 1200 ml einer 5%igen Salzsäurelösung hinzugegeben, wobei die Temperatur der Reaktionsmischung unter 5°C gehalten wurde. Der Ansatz wurde dreimal mit je 150 ml tert.-Butylmethylether (MTBE) extrahiert und die vereinigten organischen Phasen wurden viermal je ca. 1 h mit je 400 ml 5%iger wässriger Natriumhydrogencarbonatlösung gerührt, bis jeweils keine Gasentwicklung mehr zu beobachten war. Die organische Phase wurde mit 1 L vollentsalztem Wasser gewaschen, über Natriumsulfat getrocknet und das Lösungsmittel entfernt. Man erhielt 122,21 g (Ausbeute 92 %) einer klaren dunkelgelben Flüssigkeit. Die Reinheit wurde gaschromatographisch zu 99,5 % bestimmt.
1_{H}-NMR (CDCl₃, 500 MHz): 1,5 (s, 6H, C(CH₃)₂), 2,1 (s, 3H, C(O)CH₃), 2,5 (t, 2H, CH₂CH₂O), 3,4 (bs, 1H, OH), 4.1 (t, 2H, CH₂CH₂O) ppm.

### Herstellung von 4,4-Dimethyl-5-(3-acetoxypropyliden)-1,3-dioxolan-2-on (exo-VC-OAc)

In einem 300-mL-Autoklaven wurden 50 g Essigsäure-5-hydroxy-5-methyl-hex-3-inylester in 74 ml Toluol vorgelegt. Hierzu gab man 0,9 g Silberacetat und 7,8 g 1,8-Diazabicyclo[5.4.0]undec-7-en (DBU). Der Reaktionsansatz wurde auf 70 °C erwärmt und ein CO₂-Druck von 50 bar wurde eingestellt. Nach 40 h entspannte man auf Normaldruck und wusch den Reaktionsansatz mit zweimal je 100 ml Wasser und mit 100 ml 5%iger Salzsäurelösung. Die vereinigten wässrigen Phasen wurden mit 100 ml Toluol extrahiert, und die vereinigten organischen Phasen wurden über Natriumcarbonat getrocknet. Das Lösungsmittel wurde entfernt, und der erhaltene Rückstand wurde aus 200 g Cyclohexan umkristallisiert. Man erhielt 35 g des Produktes der Titelverbindung (Reinheit > 99 %). Die Identität der Titelverbindung wurde gaschromatographisch überprüft (GC-Methode: 30m FFAP ID = 0,32 mm, FD = 0,25µm; 80°C 6K/min bis 250°C Temp. Halten; Retentionszeit: 20,6min).
¹H-NMR (CDCl₃, 500 MHz): 1,5 (s, 6H, C(CH₃)2), 2,1 (s, 3H, C(O)CH₃), 2,5 (t, 2H, CH₂CH₂O), 3,4 (bs, 1H, OH), 4,1 (t, 2H, CH₂CH₂O) ppm.

### Herstellung von [(3Z)-3-(5,5-Dimethyl-2-oxo-1,3-dioxolan-4-yliden)propyl]acrylat (exo-VCA)

280 g (1,31 mol) [(3Z)-3-(5,5-Dimethyl-2-oxo-1,3-dioxolan-4-yliden)propyl]acetat (exo-VC-OAc), 1307 g (13,1 mol) Ethylacrylat 0,28 g 4-Methoxyphenol (MeHQ) und 84 g (30 Gew.-%) Novozym® 435 der Fa. Novozymes wurden zusammengegeben. Der Ansatz wurde 24 h bei 40 °C gerührt. Der Ansatz wurde filtriert, mit Aceton nachgewaschen, und das Lösungsmittel wurde bei 40 °C am Rotationsverdampfer entfernt. Man erhielt 276,7 g des Produktes der Titelverbindung mit einer Reinheit von 92,4 % (GC-Analyse).
1H-NMR (CDCl3, 400 MHz): 1,6 (s, 6H), 2,5 (q, 2H), 4,2 (t, 2H), 4,7 (t, 1H), 5,84-5,87 (dd, 1H), 6,09-6,16 (dd, 1H), 6,37-6,42 (dd, 1H) ppm.

### Beispiele 1 bis 3 und Vergleichsbeispiele V1 bis V5 Herstellung eines Copolymerisates mit exo-VCA - Monomer (B-E)

In einem mittels Ölbad geheiztem Glaskolben ausgestattet mit Rührer, Thermometer und 2 Zulaufgefäßen wurden 100 g Butylacetat 98/100 vorgelegt. Für die Monomerenmischung wurden 20 g n-Butylacrylat, 20 g n-Butylmethacrylat, 30 g Methylmethacrylat, 50 g Styrol und 80 g exo-VCA in einem der Zulaufgefäße vorgelegt. (Endfeststoffgehalt: 50 %). Die Mischung wurde im Stickstoffstrom und unter Rühren auf 125 °C erhitzt. In einem weiteren Zulaufgefäß wird eine Lösung von 12 g TBPEH (=tertiär Butyl-per-2-ethylhexanoat, Fa Pergan, Bocholt oder United Initiators, Pullach) vorgelegt. Nach Erreichen von 125°C startet man den Intiatorvorlauf so, daß eine Gesamtlaufzeit von 220 Minuten gegeben ist. 10 Minuten nach dem Intiatorvorlauf startet man die Monomermischung mit einer Gesamtzulaufzeit von 180 Minuten. (= Ini-Nachlauf von 30 Minuten). Nach Beendigung aller Zuläufe hält man das Reaktionsgemisch für weitere 180 Minuten bei dieser Temperatur, kühlt dann ab.

Die Viskosität der so erhaltenen Mischung, (gemessen mittels Mischung mit einem Rotationsviskosimeter Brookfield CAP 2000, Spindel 3, 1000RPM) wird mit 39 mPa*s gefunden, der Feststoffgehalt (1h 130°C) liegt bei 44 % ± 1%, die Säurezahl beträgt 1,4 mgKOH/g Festharz und das Equivalentgewicht liegt bei 555g. Das zahlenmittlere Molekulargewicht beträgt 3025 Dalton, das gewichtsmittlere Molekulargewicht 8315 Dalton, jeweils bestimmt mittels Gelpermeationschromatographie mit dem Gerät Agilent 1100 Series bei 35°C mit einer Hochdruckflüssigkeitschromatographie-Pumpe und dem Brechungsindexdetektor Agilent RIGI 1362A + UV G 1314A gegen einen Polystyrolstandard.

### Herstellung eines Copolymerisates mit Glycerincarbonatacrylat (B-V)

Entsprechend dem Beispiel für Polymer B der WO2012/130718, Seite 18 wurde ein Copolymerisat unter Verwendung von Glycerincarbonatacrylat folgendermaßen hergestellt:
Vorlage: 150,630g 1-Methoxy-2-propanol
Zulauf 1: 98,440g Glycerincarbonatacrylat, 84,380g 2-Ethyl-Hexylacrylat, 98,440g Styrol
Zulauf 2: 11,250g tert. -Butylperoctoat, 141,600g 1-Methoxy-2-propanol
Zulauf 3: 1,410g tert. -Butylperoctoat, 17,750g 1-Methoxy-2-propanol Fahrweise
In einem 1L Polymerisationsgefäßes wurde 150,63g 1-Methoxy-2-propanol vorgelegt und unterRuhren und Stickstoffatmosphäre auf 120°C erhitzt. Bei 120°C wurde Zulauf 1 und Zulauf 2 gestartet und in 2 Stunden zudosiert. Anschließend wurde Zulauf 3 innerhalb von 0,25 Stunden zudosiert. Nach Beendigung der Zugabe wurde die resultierende Reaktionsmischung bei 120°C noch 120 Minuten gerührt. Man erhielt so eine Polymerlösung. Die so hergestellte Polymerlösung war klar und farblos. Sie hatte einen Feststoffgehalt von 47,6% und eine Viskosität von 324 mPas (Brookfield, Spindel 3/50 rpm, 20°C). Der K-Wert, bestimmt nach Fikentscher, betrug 15,6 (1%ig in Methoxypropanol, gemäß DIN EN ISO 1628-1). Der Glaspunkt wurde per DSC ermittelt und betrug 38°C gemäß DIN 51005.

In Tabelle 1 sind die zur Herstellung des erfindungsgemäßen Copolymers (B-E) bzw. des Vergleichs-Copolymers (B-V) verwendeten Comonomere sowie die Kennzahlen und Zusammensetzungen des erfindungsgemäßen Copolymers (B-E) bzw. des Vergleichs-Copolymers (B-V) zusammengestellt.

**Tabelle 1: Kennzahlen und Zusammensetzungen des erfindungsgemäßen Copolymers (B-E) bzw. des Vergleichs-Copolymers (B-V)**

| | Exo-VC-Copolymer (B-E) | Glycerincarbonat-Copolymer (B-V) |
|---|---|---|
| Styrol | 25 | 35 |
| n-Butylmethacrylat | 10 | -- |
| n-Butylacrylat | 10 | -- |
| Glycerincarbonatacrylat (B1-V) | -- | 35 |
| Ethylhexylacrylat | -- | 30 |
| Methylmethacrylat | 15 | -- |
| Exo-VC (B1-E) | 40 | |
| TBPEH¹⁾ | 6 | -- |
| t-Butylperoctoat | -- | 4 |
| Methoxypropanol | -- | 100 |
| Butylacetat | 100 | -- |
| FK in % | 44,2 % (1h 130°C) | 47,2 (2 h 100°C) |
| Mn ²⁾ | 3025 | 5320 |
| Mw³⁾ | 8315 | 15000 |

| | | |
|---|---|---|
| Erläuterungen zu Tabelle 1: ¹⁾ TBPEH = t-Butyl-2-ethylperoxyhexanoat ²⁾ Mn = zahlenmittleres Molekulargewicht, bestimmt mittels Gelpermeationschromatographie mit dem Gerät Agilent 1100 Series bei 35°C mit einer Hochdruckflüssigkeitschromatographie-Pumpe und dem Brechungsindexdetektor Agilent RIGI 1362A + UV G 1314A gegen einen Polystyrolstandard ³⁾ Mw = gewichtsmittleres Molekulargewicht, bestimmt mittels Gelpermeationschromatographie mit dem Gerät Agilent 1100 Series bei 35°C mit einer Hochdruckflüssigkeitschromatographie-Pumpe und dem Brechungsindexdetektor Agilent RIGI 1362A + UV G 1314A gegen einen Polystyrolstandard | | |

### Klarlackzusammensetzungen

Mit den in Tabelle 2 genannten Copolymeren B-E und B-V, Butylacetat und Additiven wurde gemäß den nachfolgenden Einwaagen die jeweils erste Komponente eines 2-Komponenten-Klarlacks hergestellt: Zur Herstellung von Zweikomponenten-Klarlack-Beschichtungen werden die gemäß obigen Angaben hergestellten jeweils ersten Komponenten mit den in Tabelle 2 genannten Einwaagen der zweiten Komponente, das ethergruppenhaltige Polyamin (A1) bzw. die Aminmischung (A2), homogenisiert und direkt danach appliziert.

**Tabelle 2: Zusammensetzung der Klarlackzusammensetzungen in Gewichtsteilen**

| | Vgls.-beisp. 1 | Vgls.-beisp. 2 | Beisp. 1 | Beisp. 2 | Beisp. 3 |
|---|---|---|---|---|---|
| Carbonatacrylat-Copolymer (B-V) | 100,00 | 100,00 | | | |
| Exo VC-Acrylat-Copolymer (B-E) | | | 107,00 | 107,00 | 107,00 |
| Butylacetat | 10,00 | 10,00 | 10,00 | 10,00 | 10,00 |
| Verlaufsmittel, 10%ig in Butylacetat ³⁾ | 1,50 | 1,50 | 1,50 | 1,50 | 1,50 |
| Lichtschutzmittel ⁴⁾ | 1,00 | 1,00 | 1,00 | 1,00 | 1,00 |
| Lichtschutzmittel ⁵⁾ | 1,00 | 1,00 | 1,00 | 1,00 | 1,00 |
| Jeffamine® T 403 ¹⁾ | 15,60 | 13,26 | 12,50 | 10,60 | |
| Aminmischung (A1) ²⁾ | | | | | 4,80 |
| Summe | 129,10 | 126,76 | 133,00 | 131,1 | 125,3 |
| Carbonat: Amin ⁶⁾ | 1 : 1 | 1 : 0,85 | 1 : 1 | 1 : 0,85 | 1 : 1 |

| | | | | | |
|---|---|---|---|---|---|
| Erläuterungen zu Tabelle 2: ¹⁾ handelsübliches Polyoxypropylenethertriamin mit einem AHEW (amine hydrogen equivalent wt.) von 81 g/eq der Firma Huntsman ²⁾ Mischung aus Diethylentriamin : Dimethylpropylendiamin : Isophorondiamin = 1:1:1 ³⁾ handelsübliches Verlaufsmittel auf Basis eines polyethermodifizierten Polydimethylsiloxans, 10%ig in Butylacetat ⁴⁾ handelsübliches Lichtschutzmittel auf Basis eines UV-Absorbers auf Benztriazol-Basis, 95%ig in 1-Methoxi-2-propylacetat ⁵⁾ handelsübliches Lichtschutzmittel auf Basis eines sterisch gehinderten Amins (HALS), 100%ig ⁶⁾ Carbonat zu Aminverhältnis: Berechnet aus dem molaren Verhätnis von Carbonatgruppen zu primären Amingruppen | | | | | |

Die Klarlackzusammensetzungen der Beispiele 1 bis 3 und die der Vergleichsbeispiele V1 und V2 wurden auf Stahlbleche appliziert, die zuvor mit einer handelsüblichen eingebrannten KTL, mit einem handelsüblichen konventionellen eingebrannten Füller und mit einem weißen Wasserbasislack der 10 Minuten bei 80°C getrocknet wurde, beschichtet sind. Anschließend wurde die so erhaltene Beschichtung 30 min bei 100°C gehärtet und die so erhaltene Beschichtung den in Tabelle 3 angegebenen Prüfungen unterzogen. Zusätzlich wurde die Vergilbung direkt nach dem Einbrennen, nach einer Ofenlagerung für 7 Tage bei 100°C und einer Ofenlagerung von 1 h bei 150°C bestimmt. Die Prüfergebnisse sind jeweils in Tabelle 3 dargestellt.

**Tabelle 3: Prüfergebnisse der Beschichtungen der Beispiele 1 bis 3 und der Vergleichsbeispiele V1 und V2**

| | Vgls.- beisp. 1 | Vgls.- beisp. 2 | Beisp. 1 | Beisp. 2 | Beisp. 3 |
|---|---|---|---|---|---|
| Härtung Klarlack | 30 min 100°C | 30 min 100°C | 30 min 100°C | 30 min 100°C | 30 min 100°C |
| Oberfläche ¹⁾ | klar, glatt | klar, glatt | klar, glatt | klar, glatt | klar, glatt |
| Härte Oberfläche ²⁾ | weich | weich | hart | hart | hart |
| | | | | | |
| Delta B 45° nach Härtung ³⁾ | 1,5 | 1,1 | -0,4 | -0,1 | -0,5 |
| Delta B 45° nach Ofen 7 Tage 100 °C ³ | 9,7 | 10,3 | 4,6 | 4,0 | 2,6 |
| Delta B 45° nach Ofen 1 h 150 °C ³ | 9,0 | 8,8 | 3,7 | 3,3 | 2,9 |
| Delta B 45° nach Ofen 1 h 150°C und 24 h Sonne ⁴ | 3,4 | 3,4 | 0,4 | 0,0 | 0,5 |
| % Restglanz nach 1000h WOM-CAM-180 Q/B ⁵ | - b | 76 | 95 | 100 | 95 |

| | | | | | |
|---|---|---|---|---|---|
| Erläuterungen zu Tabelle 3: ¹⁾ Die Oberfläche wurde visuell beurteilt. ²⁾ Die Beurteilung der Härte erfolgte mit dem Fingernagel. ³⁾ Die Ermittlung der Farbwerte erfolgte mit dem Gerät MA 68 II der Firma X-Rite. ⁴⁾ Die Einwirkung von Tageslicht wird dabei mit dem sogenannten Suntest mit Tageslichtfilter simuliert, bei dem ein Xenonhochdruckbrenner als Strahlungsquelle im Wellenlängenbereich von 270 bis 800 nm die Strahlungsverteilung und -Intensität von Sonnenlicht unter Laborbedingen nachstellt. "SUNTEST"-Gerät der Fa. Heraeus Instruments, Strahlungsquelle: 1 Xenonhochdruckbrenner 1800 Watt, luftgekühlt, Supraxfilter ⁵⁾ Prüfgerät: Weather-Ometer Ci 65 A oder Ci 5000 der Fa. Atlas Strahlungsquelle: 1 Xenonhochdruckbrenner, wassergekühlt ⁶⁾ Die Probe wurde wegen stark angegriffener und aufgequollener Oberfläche nach 750h aus dem Test genommen | | | | | |

### Diskussion der Prüfergebnisse:

Überraschenderweise wurde gefunden, dass gemäß den erfindungsgemäßen Beispielen 1 bis 3 die erfindungsgemäß eingesetzten aktivierten carbonatgruppenhaltigen Verbindungen (B-E) zusammen mit aminischen Härtern zu Beschichtungen mit einer deutlich geringeren Vergilbung führen als die unter Verwendung des herkömmlichen Glycerincarbonatacrylat-Copolymers hergestellten Beschichtungen der Vergleichsbeispiele V1 und V2.

Die Ergebnisse in Tabelle 3 zeigen ferner deutlich, dass im Falle des Überbrennens mit den erfindungsgemäßen Beschichtungszusammensetzungen direkt nach dem Einbrennen die gemäß Automobilherstellern geforderte extrem niedrige Vergilbung von delta B <1 nicht erreicht werden. Überraschenderweise wurde jedoch gefunden, dass die thermische Vergilbung der erfindungsgemäßen Beschichtungen der Beispiele 1 bis 3 durch die Einwirkung von Tageslicht innerhalb von 24 h vollständig reversibel ist und so eine Anwendung der erfindungsgemäßen Beschichtungsmittelzusammensetzungen für die Automobillackierung ermöglicht, während bei den Beschichtungen zwar eine Erniedrigung der Vergilbung durch UV Licht, nicht aber eine vollständige Reversibilität erreicht wird, wie die Vergleichsbeispiele V1 und V2 zeigen. Ebenso zeigen die erfindungsgemäßen Beschichtungszusammensetzungen der Beispiele 1 bis 3 nach 1000h Kurzbewitterung noch sehr gute Glanzwerte von über 95% Restglanz. Dahingegen schafft das Vergleichsbeispiel V1 keine 1000h und das Vergleichsbeispiel V2 zeigt nach 1000h schon einen erheblichen Glanzabfall (nur noch 76% Restglanz).

## Patentansprüche

1. Nichtwässrige Beschichtungsmittelzusammensetzung enthaltend
(A) mindestens eine Verbindung (A) mit mindestens zwei Aminogruppen sowie
(B) mindestens eine oligomere und/oder polymere Verbindung (B) mit mindestens zwei Alkyliden-1,3-dioxolan-2-on-Gruppen **dadurch gekennzeichnet, dass** die Verbindung (B) erhältlich ist unter Verwendung von
i. mindestens einem Monomer (B1) der Formel (I) 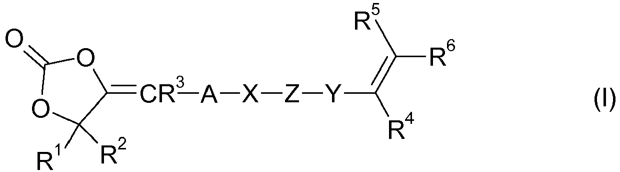 wobei
R¹, R² unabhängig voneinander für Wasserstoff, C₁-C₆-Alkyl, C₁-C₄-Alkoxy-C₁-C₄-alkyl, C₅-C₆-Cycloalkyl, Phenyl oder Phenyl-C₁ C₄-alkyl stehen;
R³ für Wasserstoff, C₁-C₆-Alkyl, C₁-C₄-Alkoxy-C₁-C₄-alkyl, C₅-C₆-Cycloalkyl, Phenyl oder Phenyl-C₁-C₄-alkyl steht, wobei R³ insbesondere für Wasserstoff steht;
R⁴ für Wasserstoff, C₁-C₄-Alkyl, CH₂COOR⁸, Phenyl oder Phenyl-C₁-C₄-alkyl steht;
R⁵, R⁶ unabhängig voneinander für Wasserstoff oder C₁-C₄-Alkyl stehen oder einer der Reste R⁵ oder R⁶ auch für COOR⁸ oder CH₂COOR⁸ stehen kann;
A für eine chemische Bindung oder C₁-C₄-Alkandiyl steht, wobei A insbesondere für C₁-C₄-Alkandiyl steht;
X für O oder NR⁷ steht;
Z für eine chemische Bindung, PO₂, SO₂ oder C=O steht, wobei Z insbesondere für C=O steht;
Y für eine chemische Bindung, CH₂ oder CHCH₃ steht, wobei Y insbesondere für eine chemische Bindung steht;
R⁷ sofern vorhanden, für C₁-C₆-Alkyl steht;
R⁸ sofern vorhanden, für Wasserstoff oder C₁-C₆-Alkyl steht;
und
ii. mindestens zwei unterschiedlichen, jeweils von dem Monomer (B1) verschiedenen, Comonomeren (B2) und (B3).

2. Beschichtungsmittelzusammensetzung nach Anspruch 1, **dadurch gekennzeichnet, dass** R¹ und R² jeweils für Wasserstoff oder C₁-C₆-Alkyl, insbesondere für Methyl oder Ethyl stehen und/oder dass R³ für Wasserstoff steht.

3. Beschichtungsmittelzusammensetzung nach Anspruch 1 oder 2, **dadurch gekennzeichnet, dass** A für Ethandiyl, X für O, Z für C=O und Y für eine chemische Bindung steht.

4. Beschichtungsmittelzusammensetzung nach einem der Ansprüche 1 bis 3, **dadurch gekennzeichnet, dass** die Verbindung (B) erhältlich ist unter Verwendung von 2 bis 6 voneinander verschiedenen monoethylenisch ungesättigten Comonomere (B2) bis (B7).

5. Beschichtungsmittelzusammensetzung nach einem der Ansprüche 1 bis 4, **dadurch gekennzeichnet, dass** die von (B1) verschiedenen Comonomere ausgewählt sind aus der Gruppe der vinylaromatischen Verbindungen und der Ester monoethylenisch ungesättigter aliphatischer Monocarbonsäuren mit aliphatischen Alkanolen oder der Ester monoethylenisch ungesättigter aliphatischer Monocarbonsäuren mit cycloaliphatischen Alkanolen oder Mischungen aus mindestens 2 dieser Comonomeren.

6. Beschichtungsmittelzusammensetzung nach einem der Ansprüche 1 bis 5, **dadurch gekennzeichnet, dass** die von (B1) verschiedenen Comonomere ausgewählt sind aus der Gruppe der Ester monoethylenisch ungesättigter aliphatischer C3-C6-Monocarbonsäuren mit C1-C8-Alkanolen oder der Ester monoethylenisch ungesättigter aliphatischer C3-C6-Monocarbonsäuren mit C5-C8-Cycloalkanolen oder der vinylaromatischen Kohlenwasserstoffe oder Mischungen aus mindestens 2 dieser Comonomeren.

7. Beschichtungsmittelzusammensetzung nach einem der Ansprüche 1 bis 6, **dadurch gekennzeichnet, dass** als Comonomere ein Mischung aus einem vinylaromatischen Kohlenwasserstoff und 2 bis 4 verschiedenen Alkylestern von C1-C8-Alkanolen mit Acrylsäure und/oder mit Methacrylsäure eingesetzt werden.

8. Beschichtungsmittelzusammensetzung nach einem der Ansprüche 1 bis 7, **dadurch gekennzeichnet, dass** die Verbindung (B) erhältlich ist unter Verwendung von
10 bis 80, bevorzugt 25 bis 70 Gew.-% und besonders bevorzugt 35 bis 65 Gew.-%, Monomer (B1)
und
20 bis 90 Gew.-%, bevorzugt 30 bis 75 Gew.-% und besonders bevorzugt 35 bis 65 Gew.-%, mindestens zweier unterschiedlicher, jeweils von dem Monomer (B1) verschiedener, Comonomerer (B2), (B3), ggf. (B4), ggf. (B5) bis ggf. (Bn),
wobei die Gew.-% Angaben jeweils bezogen sind auf das Gesamtgewicht aller zur Herstellung der Verbindung (B) eingesetzten Monomerer (B1) plus (B2 plus (B3) plus ggf. weiterer Comonomerer (B4) plus (B5) bis (Bn).

9. Beschichtungsmittelzusammensetzung nach einem der Ansprüche 1 bis 8, **dadurch gekennzeichnet, dass** die aminogruppenhaltige Verbindung (A) im Mittel mindestens zwei primäre und/oder sekundäre Aminogruppen pro Molekül aufweist.

10. Beschichtungsmittelzusammensetzung nach einem der Ansprüche 1 bis 9, **dadurch gekennzeichnet, dass** die aminogruppenhaltige Verbindung (A) ausgewählt ist aus der Gruppe der (cyclo)aliphatischen Diamine, der (cyclo)aliphatischen Triamine und/oder der Polyetheramine.

11. Beschichtungsmittelzusammensetzung nach einem der Ansprüche 1 bis 10, **dadurch gekennzeichnet, dass** die aminogruppenhaltige Verbindung (A) ausgewählt ist aus der Gruppe der Polyetheramine, insbesondere difunktionelle und trifunktionelle primäre Polyetheramine auf der Basis von Propylenoxid, der Mischungen verschiedener aliphatischer Di- und/oder aliphatischer Triamine, der Mischungen verschiedener cycloaliphatischer Di- und/oder cycloaliphatischer Triamine und der Mischungen verschiedener aliphatischer Di- und/oder aliphatischer Triamine mit cycloaliphatischen Di- und/oder cycloaliphatischen Triaminen.

12. Mehrstufiges Beschichtungsverfahren, **dadurch gekennzeichnet, dass** auf ein gegebenenfalls vorbeschichtetes Substrat eine pigmentierte Basislackschicht und danach eine Schicht aus der Beschichtungsmittelzusammensetzung nach einem der Ansprüche 1 bis 11 aufgebracht wird.

13. Mehrstufiges Beschichtungsverfahren nach Anspruch 12, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag der Beschichtungsmittelzusammensetzung nach einem der Ansprüche 1 bis 11 bei Temperaturen von 20 bis 200°C während einer Zeit von einer Minute bis zu 10 Stunden gehärtet wird.

14. Verwendung der Beschichtungsmittelzusammensetzung nach einem der Ansprüche 1 bis 11 als Klarlack beziehungsweise Anwendung des Verfahrens nach Anspruch 12 oder 13 für die Automobilserienlackierung, die Lackierung von Automobil-Anbauteilen und/oder Nutzfahrzeugen und die Autoreparaturlackierung.

15. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 11 hergestellt worden ist.

## Claims

1. Nonaqueous coating material composition comprising
(A) at least one compound (A) having at least two amino groups, and
(B) at least one oligomeric and/or polymeric compound (B) having at least two alkylidene-1,3-dioxolan-2-one groups,
**characterized in that** the compound (B) is obtainable using
i. at least one monomer (B1) of the formula (I) 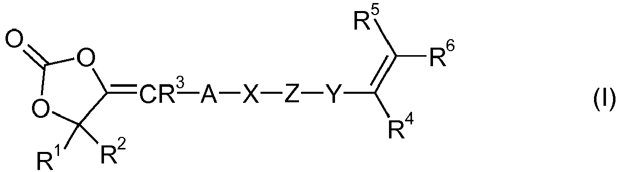 where
R¹, R² independently of one another are hydrogen, C₁-C₆ alkyl, C₁-C₄ alkoxy-C₁-C₄ alkyl, C₅-C₆ cycloalkyl, phenyl or phenyl-C₁-C₄ alkyl;
R³ is hydrogen, C₁-C₆ alkyl, C₁-C₄ alkoxy-C₁-C₄ alkyl, C₅-C₆ cycloalkyl, phenyl, or phenyl-C₁-C₄ alkyl, R³ more particularly being hydrogen;
R⁴ is hydrogen, C₁-C₄ alkyl, CH₂COOR⁸, phenyl or phenyl-C₁-C₄ alkyl;
R⁵, R⁶ independently of one another are hydrogen or C₁-C₄ alkyl or else one of the radicals, R⁵ or R⁶, may be COOR⁸ or CH₂COOR⁸;
A is a chemical bond or C₁-C₄ alkanediyl, A more particularly being C₁-C₄ alkanediyl;
X is O or NR⁷;
Z is a chemical bond, PO₂, SO₂, or C=O, Z more particularly being C=O;
Y is a chemical bond, CH₂, or CHCH₃, Y more particularly being a chemical bond;
R⁷ where present is C₁-C₆ alkyl; and
R⁸ where present is hydrogen or C₁-C₆ alkyl;
and
ii. at least two different comonomers (B2) and (B3) which are each different from the monomer (B1).

2. Coating material composition according to Claim 1, **characterized in that** R¹ and R² are each hydrogen or C₁-C₆ alkyl, more particularly methyl or ethyl, and/or wherein R³ is hydrogen.

3. Coating material composition according to Claim 1 or 2, **characterized in that** A is ethanediyl, X is O, Z is C=O, and Y is a chemical bond.

4. Coating material composition according to any of Claims 1 to 3, **characterized in that** the compound (B) is obtainable using from 2 to 6 monoethylenically unsaturated comonomers (B2) to (B7) different from one another.

5. Coating material composition according to any of Claims 1 to 4, **characterized in that** the comonomers different from (B1) are selected from the group of vinylaromatic compounds and esters of monoethylenically unsaturated aliphatic monocarboxylic acids with aliphatic alkanols, or esters of monoethylenically unsaturated aliphatic monocarboxylic acids with cycloaliphatic alkanols, or mixtures of at least two of these comonomers.

6. Coating material composition according to any of Claims 1 to 5, **characterized in that** the comonomers different from (B1) are selected from the group of esters of monoethylenically unsaturated aliphatic C3-C6 monocarboxylic acids with C1-C8 alkanols or esters of monoethylenically unsaturated aliphatic C3-C6 monocarboxylic acids with C5-C8 cycloalkanols or vinylaromatic hydrocarbons, or mixtures of at least 2 of these comonomers.

7. Coating material composition according to any of Claims 1 to 6, **characterized in that** comonomers used comprise a mixture of a vinylaromatic hydrocarbon and 2 to 4 different alkyl esters of C1-C8 alkanols with acrylic acid and/or with methacrylic acid.

8. Coating material composition according to any of Claims 1 to 7, **characterized in that** the compound (B) is obtainable using
10 to 80, preferably 25 to 70 wt%, and more preferably 35 to 65 wt% of monomer (B1)
and
20 to 90 wt%, preferably 30 to 75 wt%, and more preferably 35 to 65 wt% of at least two different comonomers (B2), (B3), optionally (B4), optionally (B5) to optionally (Bn), each different from the monomer (B1),
the weight% figures being based in each case on the total weight of all the monomers (B1) plus (B2) plus (B3) plus optionally further comonomers (B4) plus (B5) to (Bn) that are used for preparing the compound (B) .

9. Coating material composition according to any of Claims 1 to 8, **characterized in that** the amino group-containing compound (A) has on average at least two primary and/or secondary amino groups per molecule.

10. Coating material composition according to any of Claims 1 to 9, **characterized in that** the amino group-containing compound (A) is selected from the group of (cyclo)aliphatic diamines, (cyclo)aliphatic triamines and/or polyetheramines.

11. Coating material composition according to any of Claims 1 to 10, **characterized in that** the amino group-containing compound (A) is selected from the group of polyetheramines, more particularly difunctional and trifunctional primary polyetheramines based on propylene oxide, mixtures of different aliphatic diamines and/or aliphatic triamines, mixtures of different cycloaliphatic diamines and/or cycloaliphatic triamines, and mixtures of different aliphatic diamines and/or aliphatic triamines with cycloaliphatic diamines and/or cycloaliphatic triamines.

12. Multistage coating method, **characterized in that** it comprises applying, to an optionally precoated substrate, a pigmented basecoat film and thereafter a film of the coating material composition according to any of Claims 1 to 11.

13. Multistage coating method according to Claim 12, **characterized in that** application of the pigmented basecoat film is followed by drying of the applied basecoat first at temperatures from room temperature to 80°C, and application of the coating material composition according to any of claims 1 to 11 is followed by curing at temperatures from 20 to 200°C, for a time of from one minute up to 10 hours.

14. Use of the coating material composition according to any of Claims 1 to 11 as clearcoat or application of the method according to Claim 12 or 13 for automotive OEM finishing, the finishing of parts for installation in or on automobiles, and/or of commercial vehicles, and automotive refinish.

15. Multicoat effect and/or color paint system comprising at least one pigmented basecoat film and at least one clearcoat film disposed thereon, **characterized in that** the clearcoat film has been produced from a coating material composition according to any of Claims 1 to 11.

## Revendications

1. Composition d'agent de revêtement non aqueuse, contenant :
(A) au moins un composé (A) contenant au moins deux groupes amino, et
(B) au moins un composé oligomère et/ou polymère (B) contenant au moins deux groupes alkylidène-1,3-dioxolan-2-one,
**caractérisée en ce que** le composé (B) peut être obtenu en utilisant :
i. au moins un monomère (B1) de formule (I) : 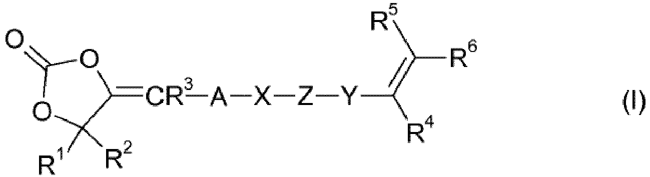 dans laquelle
R¹, R² représentent indépendamment l'un de l'autre hydrogène, alkyle en C₁-C₆, alcoxy en C₁-C₄-alkyle en C₁-C₄, cycloalkyle en C₅-C₆, phényle ou phényl-alkyle en C₁-C₄ ;
R³ représente hydrogène, alkyle en C₁-C₆, alcoxy en C₁-C₄-alkyle en C₁-C₄, cycloalkyle en C₅-C₆, phényle ou phényl-alkyle en C₁-C₄, R³ représentant notamment hydrogène ;
R⁴ représente hydrogène, alkyle en C₁-C₄, CH₂COOR⁸, phényle ou phényl-alkyle en C₁-C₄ ;
R⁵, R⁶ représentent indépendamment l'un de l'autre hydrogène ou alkyle en C₁-C₄, ou un des radicaux R⁵ ou R⁶ peut également représenter COOR⁸ ou CH₂COOR⁸ ;
A représente une liaison chimique ou alcanediyle en C₁-C₄, A représentant notamment alcanediyle en C₁-C₄ ;
X représente O ou NR⁷ ;
Z représente une liaison chimique, PO₂, SO₂ ou C=O, Z représentant notamment C=O ;
Y représente une liaison chimique, CH₂ ou CHCH₃, Y représentant notamment une liaison chimique ;
R⁷ s'il est présent, représente alkyle en C₁-C₆ ;
R⁸ s'il est présent, représente hydrogène ou alkyle en C₁-C₆ ;
et
ii. au moins deux comonomères (B2) et (B3) différents, chacun différents du monomère (B1).

2. Composition d'agent de revêtement selon la revendication 1, **caractérisée en ce que** R¹ et R² représentent chacun hydrogène ou alkyle en C₁-C₆, notamment méthyle ou éthyle, et/ou **en ce que** R³ représente hydrogène.

3. Composition d'agent de revêtement selon la revendication 1 ou 2, **caractérisée en ce qu'**A représente éthanediyle, X représente O, Z représente C=O et Y représente une liaison chimique.

4. Composition d'agent de revêtement selon l'une quelconque des revendications 1 à 3, **caractérisée en ce que** le composé (B) peut être obtenu en utilisant 2 à 6 comonomères monoéthyléniquement insaturés (B2) à (B7) différents les uns des autres.

5. Composition d'agent de revêtement selon l'une quelconque des revendications 1 à 4, **caractérisée en ce que** les comonomères différents de (B1) sont choisis dans le groupe constitué par les composés aromatiques de vinyle et les esters d'acides monocarboxyliques aliphatiques monoéthyléniquement insaturés avec des alcanols aliphatiques ou les esters d'acides monocarboxyliques aliphatiques monoéthyléniquement insaturés avec des alcanols cycloaliphatiques ou les mélanges d'au moins 2 de ces comonomères.

6. Composition d'agent de revêtement selon l'une quelconque des revendications 1 à 5, **caractérisée en ce que** les comonomères différents de (B1) sont choisis dans le groupe constitué par les esters d'acides monocarboxyliques en C3-C6 aliphatiques monoéthyléniquement insaturés avec des alcanols en C1-C8 ou les esters d'acides monocarboxyliques en C3-C6 aliphatiques monoéthyléniquement insaturés avec des cycloalcanols en C5-C8 ou les hydrocarbures aromatiques de vinyle ou les mélanges d'au moins 2 de ces comonomères.

7. Composition d'agent de revêtement selon l'une quelconque des revendications 1 à 6, **caractérisée en ce qu'**un mélange d'un hydrocarbure aromatique de vinyle et de 2 à 4 esters alkyliques différents d'alcanols en C1-C8 avec de l'acide acrylique et/ou avec de l'acide méthacrylique est utilisé en tant que comonomères.

8. Composition d'agent de revêtement selon l'une quelconque des revendications 1 à 7, **caractérisée en ce que** le composé (B) peut être obtenu en utilisant :
10 à 80, de préférence 25 à 70 % en poids et de manière particulièrement préférée 35 à 65 % en poids de monomère (B1),
et
20 à 90 % en poids, de préférence 30 à 75 % en poids et de manière particulièrement préférée 35 à 65 % en poids, d'au moins deux comonomères (B2), (B3), éventuellement (B4), éventuellement (B5) à éventuellement (Bn) différents, chacun différents du monomère (B1),
les données en % en poids se rapportant à chaque fois au poids total de tous les monomères (B1) plus (B2) plus (B3) plus éventuellement les comonomères supplémentaires (B4) plus (B5) à (Bn) utilisés pour la fabrication du composé (B).

9. Composition d'agent de revêtement selon l'une quelconque des revendications 1 à 8, **caractérisée en ce que** le composé contenant des groupes amino (A) comprend en moyenne au moins deux groupes amino primaires et/ou secondaires par molécule.

10. Composition d'agent de revêtement selon l'une quelconque des revendications 1 à 9, **caractérisée en ce que** le composé contenant des groupes amino (A) est choisi dans le groupe constitué par les diamines (cyclo)aliphatiques, les triamines (cyclo)aliphatiques et/ou les polyéther-amines.

11. Composition d'agent de revêtement selon l'une quelconque des revendications 1 à 10, **caractérisée en ce que** le composé contenant des groupes amino (A) est choisi dans le groupe constitué par les polyéther-amines, notamment les polyéther-amines primaires bifonctionnelles et trifonctionnelles à base d'oxyde de propylène, les mélanges de différentes diamines aliphatiques et/ou triamines aliphatiques, les mélanges de différentes diamines cycloaliphatiques et/ou triamines cycloaliphatiques et les mélanges de différentes diamine aliphatiques et/ou triamines aliphatiques avec des diamines cycloaliphatiques et/ou des triamines cycloaliphatiques.

12. Procédé de revêtement à plusieurs étapes, **caractérisé en ce que**, sur un substrat éventuellement pré-revêtu, une couche de vernis de base pigmentée, puis une couche de la composition d'agent de revêtement selon l'une quelconque des revendications 1 à 11 sont appliquées.

13. Procédé de revêtement à plusieurs étapes selon la revendication 12, **caractérisé en ce qu'**après l'application de la couche de vernis de base pigmentée, le vernis de base appliqué est tout d'abord séché à des températures allant de la température ambiante à 80 °C, et, après l'application de la composition d'agent de revêtement selon l'une quelconque des revendications 1 à 11, durci à des températures de 20 à 200 °C pendant une durée allant de une minute à 10 heures.

14. Utilisation de la composition d'agent de revêtement selon l'une quelconque des revendications 1 à 11 en tant que vernis transparent ou utilisation du procédé selon la revendication 12 ou 13 pour le vernissage en série d'automobile, le vernissage de composants d'automobiles et/ou de véhicules utilitaires et le vernissage de réparation d'automobiles.

15. Vernissage multicouche à effet et/ou colorant constitué par au moins une couche de vernis de base pigmentée et au moins une couche de vernis transparent agencée sur celle-ci, **caractérisé en ce que** la couche de vernis transparent a été fabriquée à partir d'une composition d'agent de revêtement selon l'une quelconque des revendications 1 à 11.
